# EUROPÄISCHE PATENTSCHRIFT

(11) **EP 3 983 178 B1**
(45) Veröffentlichungstag und Bekanntmachung des Hinweises auf die Patenterteilung: **31.08.2022**
(21) Anmeldenummer: 20747359.6
(22) Anmeldetag: 23.07.2020
(51) Int. Cl.: B25J 9/08, B25J 19/00

(54) **ARMMODUL FÜR EINEN MODULAREN ROBOTERARM EINES INDUSTRIEROBOTERS**
ARM MODULE FOR A MODULAR ROBOTIC ARM OF AN INDUSTRIAL ROBOT
MODULE DE BRAS POUR UN BRAS ROBOTISÉ MODULAIRE D'UN ROBOT INDUSTRIEL

(30) Priorität: 25.07.2019 DE 102019120135
(43) Veröffentlichungstag der Anmeldung: 20.04.2022
(73) Patentinhaber: Beckhoff Automation GmbH, 33415 Verl (DE)
(72) Erfinder: KASTLER, Peter, 1220 Wien (AT); MAIER, Clemens, 6700 Bludenz (AT); MORSCHER, Thomas, 1080 Wien (AT); PEHLIVAN, Armin, 6714 Nüziders (AT); ZECH, Christoph, 1130 Wien (AT)
(74) Vertreter: Patentanwaltskanzlei WILHELM & BECK
(86) Internationale Anmeldenummer: PCT/EP2020/070755
(87) Internationale Veröffentlichungsnummer: WO 2021/013913

(56) Entgegenhaltungen:
- EP-A1- 3 372 354
- EP-A2- 1 123 784
- WO-A1-95/32078
- WO-A1-2019/038221
- WO-A2-99/60667
- US-A- 4 990 839
- US-A1- 2001 052 735
- US-B1- 6 628 338

## Beschreibung

Armmodul für einen modularen Roboterarm eines Industrieroboters Die Erfindung betrifft ein Armmodul für einen modularen Roboterarm eines Industrieroboters. Darüber hinaus betrifft die Erfindung einen Industrieroboter.

Diese Patentanmeldung beansprucht die Priorität der deutschen Patentanmeldung DE 10 2019 120 135.7, eingereicht am 25.07.2019 mit dem Titel ARMMODUL FÜR EINEN MODULAREN ROBOTERARM EINES INDUSTRIEROBOTERS.

Die technische Disziplin der Automatisierungstechnik (Implementieren, Messen, Steuern/Regeln, Kommunikation, Mensch/Maschine-Schnittstelle, Sicherheit etc.) hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung (Verhältnis der automatisierten Fertigungsschritte zu allen Fertigungsschritten) in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind eine Entlastung des Menschen von gefährlichen, anstrengenden und/oder eintönigen Tätigkeiten, eine Verbesserung einer Qualität durch die technische Anlage, eine höhere Leistungsfähigkeit der Anlage und eine Kostenreduktion durch die Anlage. Durch Fortschritte bei Maschinen, einer Signalerfassung, einer Signalverarbeitung und/oder einer Kommunikation (Vernetzung) von Komponenten innerhalb des Automatisierungssystems, kann der Automatisierungsgrad einer bestehenden oder einer neuen Anlage im Vergleich mit dem Stand der Technik deutlich gesteigert werden.

Anwendungsspezifische Industrieroboter (Manipulatoren) sind ein fester Bestandteil von automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm (Manipulator) mit einer Mehrzahl von gegeneinander schwenkbaren und/oder drehbaren (Drehwinkel beschränkt, ggf. etwas größer als ca. 360°) proximalen (zu einer Roboterbasis hin) und distalen (von der Roboterbasis entfernt) Armgliedern, einen (End-)Effektor (Roboterhand, Werkzeug, Greifer etc.), eine lokale Steuerung/Regelung und ggf. eine globale Steuerung/Regelung. Oft sind Industrieroboter mit unterschiedlichen Sensoren ausgerüstet. Programmiert ist der Industrieroboter in der Lage, einen Arbeitsablauf autonom durchzuführen oder eine Durchführung einer Aufgabe in Abhängigkeit von Informationen eines Sensors zu verändern.

Einander betreffende, gegeneinander schwenkbare oder drehbare Armglieder besitzen eine gemeinsame mechanische Schnittstelle, wobei jenseits der mechanischen Schnittstelle optische Signale und/oder elektrische Spannung (Steuerungsinformationen) sowie elektrische Energie transportiert und ggf. ein Fluid (Gas(e) und/oder Flüssigkeit(en)) hinweg geführt werden müssen. Hierfür werden Schleppketten benötigt, um die entsprechenden Leitungen zu führen und nicht zu zerstören. Dabei sind keine beliebigen Umdrehungen (Rotationen) einander betreffender Armglieder möglich. Weiterhin bedeuten verschiedene Schnittstellen mehrere Hersteller.

Die EP 3372354 A1 offenbart ein Armmodul mit den Merkmalen des Obergriffs des Anspruchs 1. Aus der EP 1123784 A2 ist eine Energie-/ Signalübertragung mit einer Mediendurchführung für ein Robotergelenk bekannt, bei der eine fluidische Rotationsdurchführung die Schleifringeinrichtung rotationslagert bzw. vice versa. Die WO 2019/038221 A1 zeigt eine Fluiddurchführung innerhalb einer elektrischen Gleitkontakteinrichtung. Die WO 99/60667 A2 offenbart eine Fluiddurchführung innerhalb einer elektrischen Gleitkontakteinrichtung und eine Rotationslagerung der Fluid-Durchführungen durch die Gleitkontakteinrichtung. Aus der US 2001/052735 A1 ist ein Antrieb mit einer Schleifkontakt-Energie-/ Signalübertragung bekannt, welche auf/in der Abtriebswelle montiert ist.

Es ist daher eine Aufgabe der Erfindung, einen Roboterarm zu realisieren, dessen Armmodule gegeneinander rotierbar sind, wobei Steuerungsinformationen, Energie und Fluid die gegeneinander rotierbaren Armglieder passieren können.

Die Aufgabe der Erfindung ist mit einem Armmodul für einen modularen Roboterarm eines Industrieroboters und mit einem Industrieroboter gemäß den unabhängigen Ansprüchen gelöst. Vorteilhafte Weiterbildungen sind in den abhängigen Ansprüchen angeben.

Das Armmodul weist ein Gehäuse mit einer ersten Anschlussseite und einer zweiten Anschlussseite auf. Die erste Anschlussseite ist relativ gegenüber der zweiten Anschlussseite um eine Rotationsachse steuerbar verdrehbar ausgelegt. Die erste Anschlussseite weist eine rotierbare erste Anschlusseinrichtung und die zweite Anschlussseite eine gehäusefeste zweite Anschlusseinrichtung auf. Weiterhin ist einmultifunktionales Rotationsübertragungssystem für eine Rotationsübertragung von Datensignalen, von elektrischer Energie und von Fluid vorgesehen.

Mit einem solchen Armmodul kann ein modularer Roboterarm für einen Industrieroboter realisiert werden, der beliebig oft rotiert werden kann, so dass sich auch Drehwinkel (Rotationswinkel) deutlich größer als 360° realisieren lassen.

Im Armmodul ist eine Antriebseinrichtung mit einer Wellenanordnung vorgesehen, die drehfest mit der rotierbaren ersten Anschlusseinrichtung der ersten Anschlussseite verbunden ist, wobei die Wellenanordnung einen Abschnitt des multifunktionalen Rotationsübertragungssystems bildet.

Diese Auslegung sorgt für einen kompakten Aufbau des Armmoduls, im dem der rotierbare Teil des multifunktionalen Rotationsübertragungssystems in einem Abschnitt der Wellenanordnung zusammengefasst sind.

Die Wellenanordnung kann eine Abtriebswelle aufweisen, an der die rotierbare erste Anschlusseinrichtung der ersten Anschlussseite angeordnet ist, wobei ein Signalpfad als zentrale Längsdurchgangsausnehmung, ein Elektropfad als eine exzentrische Längsdurchgangsausnehmung und ein Fluidpfad als eine weitere exzentrische Längsdurchgangsausnehmung in der eine Abtriebswelle eingerichtet sind.

Das multifunktionale Rotationsübertragungssystemweist eine elektrische Schleifringeinrichtung mit einer Bürsten aufweisenden Bürsteneinrichtung und einer Schleifkontakte aufweisenden Gleitkontaktringeinrichtung auf. Die Gleitkontaktringeinrichtung auf der Abtriebswelle der Wellenanordnung ist dabei so angeordnet, dass die Schleifkontakte der elektrischen Gleitkontaktringeinrichtung mit der Abtriebswelle mitdrehen und Elektrizität von den zugeordneten Bürsten der Bürsteneinrichtung abgreifen.

Diese Auslegung des multifunktionalen Rotationsübertragungssystems ermöglicht eine zuverlässige Übertragung elektrischer Energie innerhalb des Armmoduls zwischen zwei gegeneinander rotierbaren Anschlussseiten.

Das multifunktionale Rotationsübertragungssystem weist weiter eine Umfangsfluidkanäle aufweisenden Fluidzuführeinrichtung auf. Die Längsdurchgangsausnehmung des Fluidpfads innerhalb der Abtriebswelle ist als Fluidleitungen ausgebildet, wobei die Fluidleitungen jeweils eine dem jeweiligen Umfangsfluidkanal zugeordnete Fluidleitungsdurchgangsbohrung aufweisen. Somit ist ein Fluid zwischen einem Umfangsfluidkanal und einer Fluidleitung übertrabbar.

Mit einem so ausgestalteten multifunktionalen Rotationsübertragungssystem kann eine Fluidübertragung insbesondere auch auf mehreren Kanälen innerhalb der Armmoduls zwischen zwei gegeneinander rotierbaren Anschlussseiten erfolgen.

Die Fluidzuführeinrichtung des multifunktionalen Rotationsübertragungssystems ist wenigstens abschnittsweise innerhalb der elektrischen Schleifringeinrichtung angeordnet.

Diese radiale Anordnung von fluidischer Rotationsdurchführung und elektrischer Schleifringeinrichtung ist gegenüber einer axialen Anordnung vergleichsweise kurz, sodass sich eine kleine Gesamtgröße ergibt.

Die Erfindung ist im Folgenden anhand von Ausführungsbeispielen unter Bezugnahme auf die beigefügten, schematischen und nicht maßstabsgetreuen Zeichnungen näher erläutert. Abschnitte, Elemente, Bauteile, Einheiten, Komponenten und/oder Schemata, welche eine identische oder analoge Ausbildung und/oder Funktion besitzen, sind in der Figurenbeschreibung, der Bezugszeichenliste, den Patentansprüchen und in den Figuren der Zeichnung mit denselben Bezugszeichen gekennzeichnet.

Die Merkmale der Beschreibung sind für die Definition des Schutzumfangs nicht maßgeblich. Dieser wird durch den beiliegenden Anspruchssatz definiert.

In den Figuren zeigen:
Fig. 1 in einer Perspektivansicht einen Industrieroboter mit einem modularen, sechsachsigen Roboterarm;
Fig. 2 in einer Perspektivansicht ein aktives Armmodul für einen Roboterarm aus Fig. 1;
Fig. 3 in einer Schnittansicht zwei miteinander verbundene aktive Armmodule des Industrieroboters aus Fig. 1;
Fig. 4 zeigt in einer Schnittansicht ein aktives Armmodul aus Fig. 3 mit einem multifunktionalen Rotationsübertragungssystem, wobei Wege einer Signalübertragung, einer elektrischen Energieübertragung und einer Fluidübertragung schematisch dargestellt sind;
Fig. 5 in einer Perspektivansicht die rotierbare Abtriebswelle mit daran angeschlossener rotierbarer Anschlusseinrichtung im aktiven Armmodul aus Fig. 4;
Fig. 6 in einer Draufsicht die rotierbare Anschlusseinrichtung aus Fig. 5;
Fig. 7 in einer Schnittansicht die rotierbare Abtriebswelle mit daran angeschlossener rotierbarer Anschlusseinrichtung aus Fig. 5;
Fig. 8 in einer Detailansicht eine Ausführungsform der Signal-Rotationsübertragungseinrichtung im multifunktionalen Rotationsübertragungssystem;
Fig. 9 in einer Detailansicht eine weitere Ausführungsform der Signal-Rotationsübertragungseinrichtung im multifunktionalen Rotationsübertragungssystem;
Fig. 10 in einer Schnittansicht ein aktives Armmodul des Industrieroboters aus Fig. 1, mit einer weiteren Ausführungsform der Signal-Rotationsübertragungseinrichtung im multifunktionalen Rotationsübertragungssystem;
Fig. 11 in einer Detailansicht die Rotationsübertragungseinrichtung aus Fig. 10;
Fig. 12 in einer Perspektivansicht eine Ausführungsform der elektrischen Rotationsübertragungseinrichtung im multifunktionalen Rotationsübertragungssystem;
Fig. 13 in einer Perspektivansicht einen Teilabschnitt einer Ausführungsform der fluidischen Rotationsübertragungseinrichtung im multifunktionalen Rotationsübertragungssystem; und
Fig. 14 in einer versetzt geschnittenen Perspektivansicht, einen weiteren Teilabschnitt der Ausführungsform der fluidischen Rotationsübertragungseinrichtung im multifunktionalen Rotationsübertragungssystem.

Die Erfindung ist im Folgenden anhand von Ausführungsbeispielen von Varianten eines multifunktionalen Rotationsübertragungssystems für Ausführungsformen eines modularen Roboterarms für einen Industrieroboter näher erläutert. Obwohl die Erfindung detaillierter durch die Ausführungsbeispiele näher beschrieben und illustriert ist, so ist die Erfindung nicht durch die offenbarten Ausführungsbeispiele, sondern lediglich durch den beiliegenden Anspruchssatz eingeschränkt.

In der Zeichnung sind nur diejenigen räumlichen Abschnitte eines Gegenstands der Erfindung dargestellt, welche für ein Verständnis der Erfindung notwendig sind. Ferner bezieht sich die Erläuterung der Erfindung im Folgenden auf ein polares Koordinatensystem mit einer Axialrichtung Ar, einer Radialrichtung Rr und einer Umfangsrichtung Ur. Eine Rotationsachse Ra eines bestimmten Armmoduls ist dabei koaxial oder parallel zu einer dieses Armmodul betreffenden Axialrichtung Ar.

Es soll eine Rotationsübertragung von Datensignalen, elektrischem Strom bzw. elektrischer Spannung und Fluid mit Hilfe des multifunktionalen Rotationsübertragungssystems in dem modularen Industrieroboter erfolgen. Hierbei sollen die Armmodule des modularen Industrieroboters über steckbare bzw. schraubbare Kontaktierungen miteinander verbindbar sein. Entsprechende Verbindungseinrichtungen zum Übertragen von Datensignalen, elektrischem Strom bzw. elektrischer Spannung und Fluid sollen dabei ebenfalls steckbar sein.

Die entsprechenden Einrichtungen sollen robust sein und in einem industriellen Umfeld ihre Funktionsfähigkeit aufrechterhalten können. Ferner sollen die entsprechenden Einrichtungen kostengünstig und platzsparend sein, da die einzelnen Armmodule kompakt und zu einem kompetitiven Preis angeboten werden sollen.

Für die Übertragung von Datensignalen kann über optische Signale, die durch einen Lichtwellenleiter geführt werden, erfolgen. Es können zur Übertragung von Datensignalen auch elektrische Signale eingesetzt werden, die in einem Datenkabel laufen. Hierfür ist eine Signal-Rotationsübertragungseinrichtung des multifunktionalen Rotationsübertragungssystems notwendig, um die Vorgabe einer Rotierbarkeit der Armmodule zueinander realisieren zu können.

Um ferner die Vorgabe einer Rotierbarkeit der Armmodule gegeneinander realisieren zu können, erfolgt eine Rotationsübertragung von elektrischem Strom bzw. elektrischer Spannung armmodulintern mittels einer elektrischen Rotationsübertragungseinrichtung des multifunktionalen Rotationsübertragungssystems in Form einer elektrischen Schleifringeinrichtung.

Um des Weiteren eine Rotationsübertragung von Fluid realisieren zu können, erfolgt eine Rotationsübertragung von Fluid armmodulintern mittels einer fluidischen Rotationsübertragungseinrichtung des multifunktionalen Rotationsübertragungssystems in Form einer fluidischen Rotationsdurchführung.

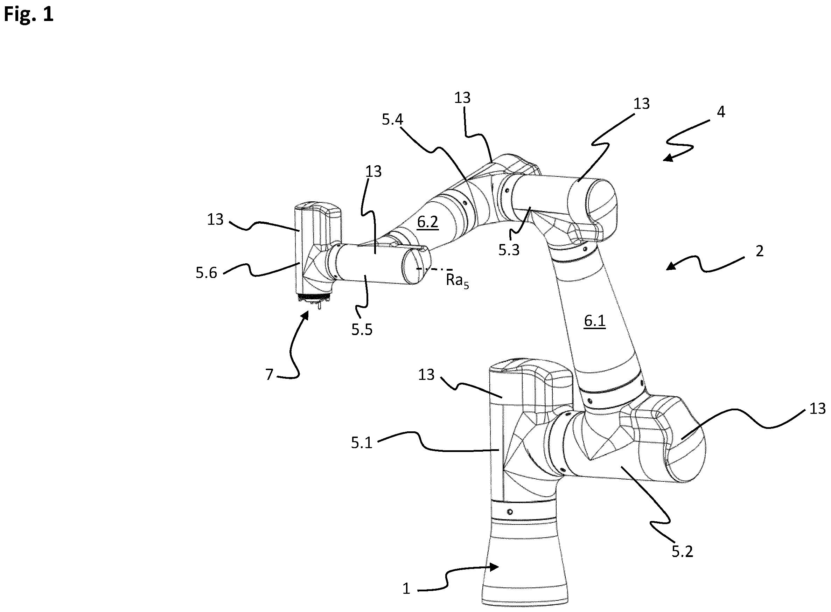

In der Fig. 1 ist beispielhaft eine Ausführungsform einer Variante eines Roboterarms 2 eines modularen Industrieroboters dargestellt, welcher auch als Handhabungsroboter oder Arbeitsmaschine bezeichenbar ist. Ein Industrieroboter ist eine automatische Maschine mit mehreren Freiheitsgraden, welcher durch eine vorprogrammierte Steuerung/Regelung verschiedene Funktionen in einer Arbeitsumgebung in (bedingter) Eigenleistung durchführen kann. Der modulare Industrieroboter umfasst eine Roboterbasis 1, den Roboterarm 2 und einen bevorzugt auswechselbaren (End-)Effektor (nicht gezeigt), auch als Roboterhand bezeichenbar, mit beispielsweise einem Werkzeug, einem Greifer etc., welcher an einem distalen Ende 7 des Roboterarms 2 anordenbar ist.

Der Roboterarm 2 besitzt zwei bis sechs Bewegungsachsen. In der Ausführungsform in der Fig. 1 sind sechs rotatorische Freiheitsgrade vorgesehen. Es lassen sich dabei eine beliebige Anzahl von vollständigen und teilweisen Umdrehungen eines betreffenden Armmoduls des Roboterarms 2 in beide Umfangsrichtungen einer betreffenden Rotationsachse durchführen. Es ist möglich, eine jeweilige Rotationsachse auch als eine Schwenkachse oder Drehachse auszubilden, d. h. eine Bewegung des betreffenden Armmoduls auf einen bestimmten Winkel zu beschränken, wie beispielsweise auf Winkel kleiner als 720°, 540°, 360°, 270°, 180°, 90° oder 45°.

Einem Armmodul 4 bzw. einer jeweiligen Rotationsachse Raₙ des Armmoduls 4 können Sensoren (in Fig. 1 nicht gezeigt) zugeordnet sein, deren Daten für eine Steuerung des entsprechenden Armmoduls 4 bzw. des Roboterarms 2 verwendet werden können. Es können z. B. ein Kraft- und/oder Drehmomentsensor sowie ein Positionssensor vorgesehen sein, mit welchen eine Kraft und/oder ein Drehmoment auf das Armmodul 4 sowie eine Position des Armmoduls 4 erfassbar sind. Dies ist ggf. auch auf einen Abschnitt oder einen Längsendabschnitt des Roboterarms 2 beschränkbar.

Der vorliegende Roboterarm 2 des Industrieroboters ist modular mit einer Mehrzahl von Armmodulen 4 aufgebaut. Prinzipiell sind die Armmodule 4 beliebig auslegbar, wobei, wie in der Fig. 1 gezeigt, zwischen aktiven Armmodulen 5 und passiven Armmodulen 6 unterschieden werden kann. Ein aktives Armmodul 5 besitzt eine Antriebseinrichtung 13, mittels welcher ein daran anschließbares weiteres Armmodul 4 geschwenkt, gedreht und/oder rotiert werden kann. Analog dazu weist ein passives Armmodul 6 keine Antriebseinrichtung auf. Alle Merkmale des Armmoduls 4, die im Wesentlichen für ein aktives Armmodul 5 beschrieben werden, können analog oder in angepasster Form auch in einem passiven Armmodul 6 ausgebildet sein. Alternativ kann ein passives Armmodul 5 auch keine oder nur einige der beschriebenen Rotationsübertragungseinrichtungen für Daten, Energie und/oder Fluid aufweisen.

Vorliegend weist ein bestimmter Modulbaukasten für einen Roboterarm 2 wenigstens einen Typ eines aktiven Armmoduls 5 in J-Form und ggf. wenigstens einen Typ eines passiven Armmoduls 6 in I-Form, jeweils mit stirn- und/oder längs-/rumpfseitigen und jeweils zueinander mechanisch komplementären oder mechanisch analogen Anschlüssen auf. Statt einer J-Form für das aktive Armmodul 5 bzw. einer I-Form für das passive Armmodul 6 sind ggf. andere geometrische Formen anwendbar.

Abgesehen von der Roboterbasis 1 und/oder einem Effektor am distalen Ende 7, sind bevorzugt sämtliche Armmodule 4 solch eines Modulbaukastens für Roboterarme 2 derart ausgebildet, dass immer zwei Anschlüsse zweier Armmodule 4 miteinander korrespondieren und miteinander verbunden werden können. D. h. eine erste Anschlussseite eines beliebigen Armmoduls 4 des Modulbaukastens ist an einer zweiten Anschlussseite eines beliebigen weiteren Armmoduls 4 dieses Modulbaukastens anschließbar, bzw. vice versa. Bevorzugt besitzen die erste Anschlussseite und die zweite Anschlussseite des Armmoduls 4 jeweils eine einheitliche, komplementäre Kontaktierungsmimik, die eine Kompatibilität der Armmodule 4 über betreffende, insbesondere alle, Baureihen des Modulbaukastens hinweg sicherstellt.

In der Fig. 1 sind die aktiven Armmodule 5 und die passiven Armmodule 6 zur Unterscheidung jeweils mit einer Zusatznummer getrennt durch einen Punkt versehen, wobei ausgehend von der Roboterbasis 1 in Richtung des distalen Endes 7 nummeriert ist. Bei dem Roboterarm 2 in der Ausführung gemäß der Fig. 1 ist ein erstes aktives Armmodul 5.1 mit der Roboterbasis 1 an der ersten Anschlussseite verbunden. An die zweite Anschlussseite des ersten aktiven Armmoduls 5.1 ist die erste Anschlussseite eines zweiten aktiven Armmoduls 5.2 angeschlossen. Zwischen dem zweiten aktiven Armmodul 5.2 und einem dritten aktiven Armmodul 5.3 ist ein erstes passives Armmodul 6.1 angeordnet, welches die zweite Anschlussseite des zweiten aktiven Armmoduls 5.2 mit der zweiten Anschlussseite des dritten aktiven Armmoduls 5.3 verbindet. An der ersten Anschlussseite des dritten aktiven Armmoduls 5.3 ist die zweite Anschlussseite eines vierten aktiven Armmoduls 5.4 angeschlossen. Die erste Anschlussseite des vierten aktiven Armmoduls 5.4 ist über ein zweites passives Armmoduls 6.2 mit der zweiten Anschlussseite eines fünften aktiven Armmoduls 5.5 verbunden. An die erste Anschlussseite des fünften aktiven Armmoduls 5.5 ist die zweite Anschlussseite eines sechsten aktiven Armmoduls 5.6 angeschlossen, dessen erste Anschlussseite dann das distale Ende 7 des Roboterarms 2 bildet.

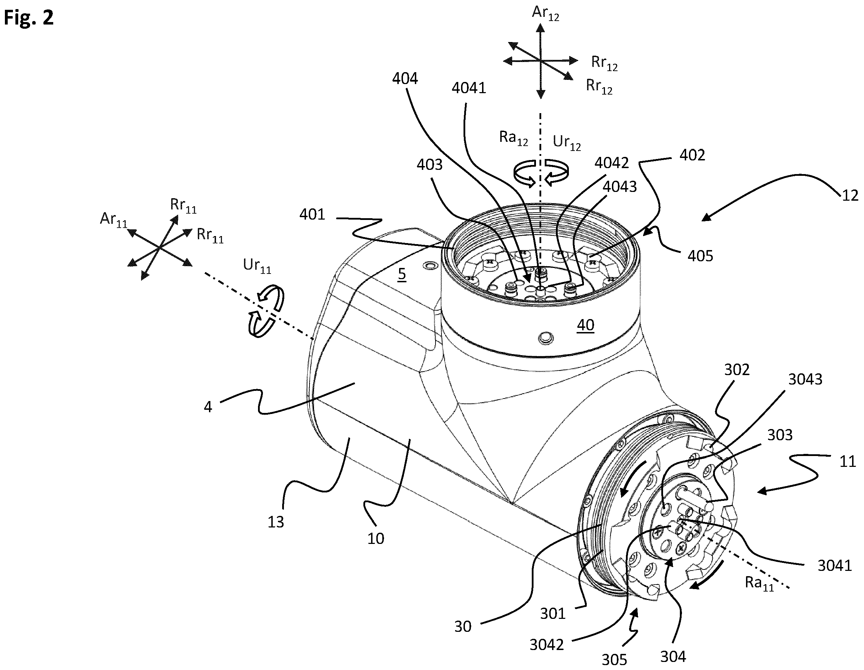

In der Fig. 2 ist in einer Perspektivansicht beispielhaft ein aktives Armmodul 5 für den Roboterarm 2 aus der Fig. 1 gezeigt. Dabei verbindet ein Gehäuse 10 in J-Form die erste Anschlussseite 11 mit der zweiten Anschlussseite 12 mechanisch. Für die erste Anschlussseite 11 und die zweite Anschlussseite 12 ist jeweils ein polares Koordinatensystem mit einer Axialrichtung Ar, einer Radialrichtung Rr und einer Umfangsrichtung Ur angezeigt, die jeweils mit einem entsprechenden Index für die zugeordnete Anschlussseite versehen sind. Weiterhin ist für jede Anschlussseite eine zugeordnete Rotationsachse Ra mit dem entsprechenden Index dargestellt.

Die erste Anschlussseite 11 des aktiven Armmoduls 5 ist mechanisch, optisch, elektrisch und fluidisch mit der zweiten Anschlussseite eines weiteren Armmoduls 4 (nicht gezeigt) koppelbar. Ferner ist die zweite Anschlussseite 12 des aktiven Armmoduls 5 mechanisch, signaltechnisch beispielsweise optisch, elektrisch und fluidisch mit der ersten Anschlussseite eines weiteren Armmoduls 4 (nicht gezeigt) koppelbar. Hierbei ist die erste Anschlussseite 11 des aktiven Armmoduls 5 bevorzugt rotierbar am aktiven Armmodul 5 vorgesehen, wobei die zweite Anschlussseite 12 dann fest am aktiven Armmodul 5 eingerichtet ist. Die Festlegung von rotierbarer und nicht-rotierbarer Anschlussseite kann aber auch genau umgekehrt sein. Bei einem passiven Armmodul 6 in der Fig. 1 sind sowohl die erste Anschlussseite als auch die zweite Anschlussseite starr an einem I-förmigen Gehäuse ausgeführt. Die erste Anschlussseite und die zweite Anschlussseite der aktiven und der passiven Armmodule sind korrespondierend zueinander ausgebildet.

Bei dem in der Fig. 2 gezeigten Armmodul 5 weist die erste Anschlussseite 11 eine erste rotierbare Anschlusseinrichtung 30 und die zweite Anschlussseite 12 eine gehäusefeste zweite Anschlusseinrichtung 40 auf.

Die rotierbare erste Anschlusseinrichtung 30, die sich senkrecht zur Rotationsachse Ra₁₁ der ersten Anschlussseite 11 erstreckt, ist kreisförmig ausgebildet und drehbar am Gehäuse 10 angeordnet. An einer äußeren Umfangsseite der ersten Anschlusseinrichtung 30 ist ein Außengewinde 301 angebracht. Die erste Anschlusseinrichtung 30 weist eine vier Zähne aufweisende erste Stirnverzahnung 302 auf, die als Hirth-Verzahnung ausgebildet ist. Das Außengewinde 301 und die erste Stirnverzahnung 302 bilden erste mechanische Verbindungselemente 305 der rotierbaren ersten Anschlusseinrichtung 30.

Die erste Anschlusseinrichtung 30 umfasst zudem eine erste Kontakteinrichtung 304, die eine erste Signal-Schnittstelleneinrichtung 3041, eine erste elektrische Schnittstelleneinrichtung 3042 und eine erste fluidische Schnittstelleneinrichtung 3043 beinhaltet.

Die gehäusefeste zweite Anschlusseinrichtung 40, die auch kreisförmig ausgebildet ist, ist senkrecht zur Rotationsachse Ra₁₂ der ersten Anschlussseite 12 ausgerichtet und drehfest mit dem Gehäuse 10 verbunden. Umfangsseitig weist die zweite Anschlusseinrichtung 40 einen Befestigungsring 401 mit einem Innengewinde auf, wobei das Innengewinde korrespondierend zu dem Außengewinde 301 der ersten Anschlusseinrichtung 30 ausgebildet ist. Die zweite Anschlusseinrichtung 40 umfasst weiter eine vier Zähne aufweisende zweite Stirnverzahnung 402, die als Hirth-Verzahnung ausgebildet ist und komplementär zu den Zähnen der ersten Stirnverzahnung 302 der ersten Anschlusseinrichtung 30 ausgebildet ist. In der zweiten Anschlusseinrichtung 40 ist zudem eine Zentrieraufnahme 403 vorgesehen, die mit dem Zentrierstift 303 der ersten Anschlusseinrichtung 30 korrespondiert. Der Befestigungsring 401 mit dem Innengewinde und die zweite Stirnverzahnung 402 bilden zweite mechanische Verbindungselemente 405 der gehäusefesten zweiten Anschlusseinrichtung 40.

Die zweite Anschlusseinrichtung 40 weist ferner eine zweite Kontakteinrichtung 404 auf, die eine zweite Signal-Schnittstelleneinrichtung 4041, eine zweite elektrische Schnittstelleneinrichtung 4042 und eine zweite fluidische Schnittstelleneinrichtung 4043 beinhaltet, die komplementär zu der ersten Signal-Schnittstelleneinrichtung 3041, der ersten elektrischen Schnittstelleneinrichtung 3042 und der ersten fluidischen Schnittstelleneinrichtung 3043 der ersten Kontakteinrichtung 304 der ersten Anschlusseinrichtung 30 ausgebildet sind.

Bei Zusammenbau des Roboterarms 2, wie er in der Fig. 1 gezeigt ist, wird die erste Anschlusseinrichtung 30 eines aktiven Armmoduls 5 auf die zweite Anschlusseinrichtung 40 eines ersten weiteren aktiven Armmoduls 5 aufgesetzt. Dabei greift der Zentrierstift 303 in die Zentrieraufnahme 403 ein. Der Zentrierstift 303 und die Zentrieraufnahme 403 dienen so als Kodiereinrichtung. Es könnte aber auch eine anders ausgestaltete Kodierung vorgesehen sein. Eine Kodierung könnte beispielsweise über eine komplementäre Geometrie der Anschlusseinrichtungen erfolgen.

Durch Verdrehung des Befestigungsrings 401 wird das Innengewinde auf das Außengewinde 301 aufgeschraubt, wodurch die zweite Anschlusseinrichtung 40 auf die erste Anschlusseinrichtung 30 gepresst wird. Im angepressten Zustand greifen die erste Stirnverzahnung 302 und die zweite Stirnverzahnung 402 derart ineinander ein, dass die erste Anschlusseinrichtung 30 und die zweite Anschlusseinrichtung 40 mechanisch drehmomentschlüssig miteinander verbunden sind. Ferner kontaktiert die erste Kontakteinrichtung 303 die zweite Kontakteinrichtung 403, so dass eine signaltechnische, elektrische und fluidische Kopplung zur Übertragung von Datensignalen, elektrischem Strom bzw. elektrischer Spannung und Fluid bereitgestellt ist.

Die erste Kontakteinrichtung 304 der ersten Anschlusseinrichtung 30 mit den jeweiligen Schnittstelleneinrichtungen und die zweite Kontakteinrichtung 404 der zweiten Anschlusseinrichtung 40 mit den jeweiligen Schnittstelleneinrichtungen sind radial innerhalb der mechanischen Verbindung angeordnet, die durch das Außengewinde 301 und die erste Stirnverzahnung 302 der ersten Anschlusseinrichtung 30 und dem Befestigungsring 401 mit dem Innengewinde der zweiten Stirnverzahnung 402 der zweiten Anschlusseinrichtung 40 gebildet ist.

Die Signal-Kopplung der aktiven Armmodule 5 erfolgt durch Übertragung zwischen der ersten Signal-Schnittstelleneinrichtung 3041 der ersten Kontakteinrichtung 303 und der zweiten Signal-Schnittstelleneinrichtung 4041 der zweiten Kontakteinrichtung 403, die ineinandergesteckt werden können. Bevorzugt sind die Signal-Schnittstelleneinrichtungen dabei als einfach aufgebaute opto- oder elektromechanische Berührverbindungseinrichtungen oder Steckverbindungseinrichtungen ausgebildet.

Die elektrische Kopplung der aktiven Armmodule 5 erfolgt durch Übertragung zwischen der ersten elektrischen Schnittstelleneinrichtung 3042 der ersten Kontakteinrichtung 303 und der zweiten elektrischen Schnittstelleneinrichtung 4042 der zweiten Kontakteinrichtung 403. Bevorzugt sind die elektrischen Schnittstelleneinrichtungen dabei als einfach aufgebaute elektromechanische Berührverbindungseinrichtungen oder Steckverbindungseinrichtungen ausgebildet.

Die fluidische Kopplung der aktiven Armmodule 5 erfolgt durch Übertragung zwischen der ersten fluidischen Schnittstelleneinrichtung 3043 der ersten Kontakteinrichtung 303 und der zweiten fluidischen Schnittstelleneinrichtung 4043 der zweiten Kontakteinrichtung 403. Bevorzugt sind die fluidischen Schnittstelleneinrichtungen dabei als einfach aufgebaute fluidmechanische Berührverbindungseinrichtungen oder Steckverbindungseinrichtungen ausgebildet.

Die Signal-Kopplung erfolgt dabei auf der zentralen Achse, insbesondere der Rotationsachse, der mechanischen Verbindung. Die elektrische Kopplung und die fluidische Kopplung sind radial außerhalb der Signal-Kopplung vorgesehen.

Die Montage wurde beispielhaft für zwei aktive Armmodule 5 des Roboterarms 2 in der Fig. 1 erläutert. Der Anbau von passiven Armmodulen 6 erfolgt auf die gleiche Weise. Durch die Verbindung der ersten Anschlusseinrichtung 30 mit der zweiten Anschlusseinrichtung 40 sind benachbarte Armmodule 4 mechanisch befestigt. Weiterhin ist eine signaltechnische, elektrische und fluidische Kopplung zur Übertragung von Datensignalen, elektrischem Strom bzw. elektrischer Spannung und Fluid bereitgestellt.

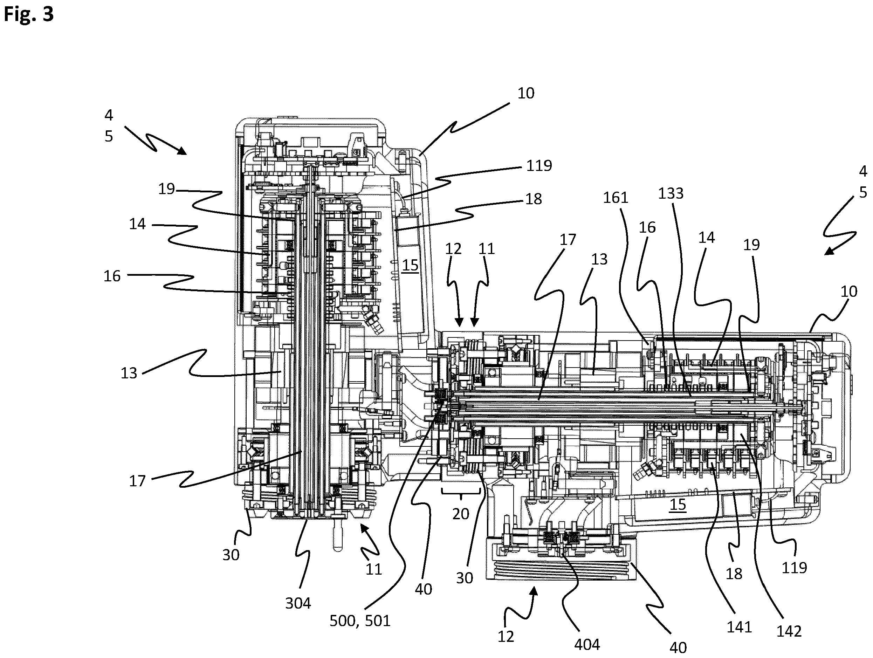

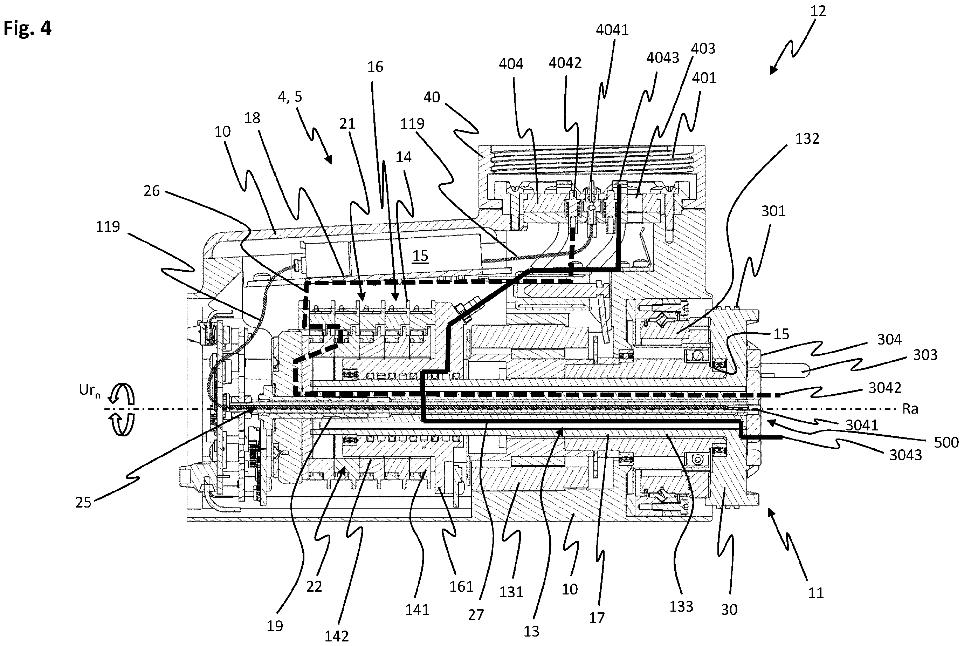

Die Fig. 3 zeigt in einer Schnittansicht zwei miteinander verbundene aktive Armmodule 5 des Industrieroboters gemäß der Fig. 1 in einer ersten Ausführungsform. Die beiden aktiven Armmodule 5 sind dabei mit der ersten Anschlussseite 11 und der zweiten Anschlussseite 12 versehen, die in Fig. 2 gezeigt ist. Die beiden aktiven Armmodule 5 sind identisch aufgebaut, weshalb für die Bestandteile der beiden aktiven Armmodule 5 dieselben Bezugszeichen verwendet werden. In Fig. 4 ist weiter ein einzelnes aktives Armmodul 5 aus Fig. 3, wiederum in einer zentral geschnittenen, zweidimensionalen Seitenansicht dargestellt, wobei das aktive Armmodul 5 in der in der Fig. 4 dargestellten Ausführungsform ein Gehäuse 10 ohne Endkappe an der der ersten Anschlussseite 11 in Richtung der Rotationsachse Ra₁₁ der ersten Anschlussseite 11 gegenüberliegenden Seite aufweist.

Die einander zugewandten ersten und zweiten Anschlussseiten 11, 12 der zwei aktiven Armmodule 5 bilden eine mechanische Schnittstelle 20, wobei die rotierbare erste Anschlusseinrichtung 30 der ersten Anschlussseite 11 und die gehäusefeste zweite Anschlusseinrichtung 40 der zweiten Anschlussseite 12 aufeinanderliegen und in der vorstehend erläuterten Weise montiert wurden. Dabei kontaktiert die erste Kontakteinrichtung 303 der ersten Anschlusseinrichtung 30 die zweite Kontakteinrichtung 403 der zweiten Anschlusseinrichtung 40, sodass eine Übertragung von Datensignalen, elektrischem Strom bzw. elektrischer Spannung und Fluid zwischen den beiden Kontakteinrichtungen über deren signaltechnische, elektrische und fluidische Schnittstelleneinrichtungen erfolgen kann.

Im Gehäuse 10 des aktiven Armmoduls 5 ist die Antriebseinrichtung 13 eingerichtet, wobei die Antriebseinrichtung 13 bevorzugt einen Elektromotor 131 und eine Getriebeeinrichtung 132 aufweist. Zwischen dem Elektromotor 131 und der Getriebeeinrichtung 132 befindet sich bevorzugt eine Wellenanordnung 19 der Antriebseinrichtung 13 mit einer insbesondere vergleichsweise schnell rotierbaren Hohlwelle 133, in welcher eine insbesondere vergleichsweise langsam rotierbare Abtriebswelle 17 eingerichtet ist.

Der Elektromotor 131 treibt mit einer Abtriebsdrehzahl die schnelle Hohlwelle 133 als Eingangswelle der Getriebeeinrichtung 132 an. Ein Ausgang der Getriebeeinrichtung 132 ist bevorzugt drehfest mit der langsamen Abtriebswelle 17 verbunden. Die Abtriebswelle 17 wiederum ist mit der ersten Anschlusseinrichtung 30 der ersten Anschlussseite 11 drehfest verbunden und erstreckt sich ausgehend von dieser in die Hohlwelle hinein und bevorzugt auch durch diese hindurch, wobei sie bevorzugt rotationsgelagert ist.

Weiterhin weist das aktive Armmodul 5 eine elektronische Modul-Steuereinheit 18 zum Ansteuern der Antriebseinrichtung 13 auf. Die Modul-Steuereinheit 18 erhält ihre Steuerdaten von einem bevorzugt auf einer Platine der Modul-Steuereinheit 18 vorgesehenen Transceiver 15, welcher auch als Sendeempfangseinheit bezeichenbar und bevorzugt als ein bidirektionales SFP-Modul ausgebildet ist. Ein integrierter Schaltkreis des Transceivers 15 bereitet einerseits empfangene Signale von einer Transceiver-Fotodiode elektrisch auf und leitet sie weiter, und wandelt andererseits empfangene elektronische Signale in geeignete optische Pulse für einen Transceiver-Laser um. Solche SFP-Module sind Standard in der Netzwerktechnik.

Die Transceiver 15 der Modul-Steuereinheiten 18 der zwei benachbarten aktiven Armmodule 5 kommunizieren über Lichtwellenleiter 119 optisch miteinander. Die Lichtleiter 119 verbinden dabei jeweils auch die ersten und zweiten Anschlussseiten 11, 12 innerhalb des Gehäuses 10 mit dem jeweiligen Transceiver 15 des aktiven Armmoduls 5. Die Signal-Übertragungsstrecke im Gehäuse 10 des aktiven Armmoduls 5 ist bei der Ausführungsform in Fig. 3 als optische Übertragungsstrecke ausgebildet und verläuft von der ersten Anschlussseite 11 über den Lichtleiter 119, der zuerst in der Abtriebswelle 17 angeordnet (siehe Fig. 4) und dann aus der Abtriebswelle 17 herausgeführt ist, zum Transceiver 15 und vom dem Transceiver 15 weiter über den Lichtleiter 119 zu der zweiten Anschlussseite 12. Die optische Datenübertragung kann dabei bidirektional erfolgen. Statt mit einem optische Übertragungsweg können die Signale auch auf anderen einem anderen Übertragungsmedium wie einem elektrischen Leiter übertragen werden.

Mithilfe der Abtriebswelle 17 sind die erste Anschlussseite 11 und die zweite Anschlussseite 12 innerhalb des aktiven Armmoduls 5 mechanisch, signaltechnische, elektrisch und fluidisch indirekt miteinander verbunden, wodurch sich im aktiven Armmodul 5 ein multifunktionales Rotationsübertragungssystem ausbildet. Die Abtriebswelle 17 fungiert dabei als Teilnehmer bzw. Abschnitt einer mechanischen, optischen, elektrischen und fluidischen Rotationsübertragung im multifunktionalen Rotationsübertragungssystem.

Die mechanische Rotationsübertragung innerhalb des aktiven Armmoduls 5 wird durch die Antriebseinrichtung 13 bereitgestellt, welche die mit der Abtriebswelle 17 drehfest verbundene erste Anschlusseinrichtung 30 der ersten Anschlussseite 11 des aktiven Armmoduls 5 gegen das Gehäuse 10 und damit gegen die gehäusefeste zweite Anschlusseinrichtung 40 der zweiten Anschlussseite 12 rotiert.

Zur elektrischen Rotationsübertragung innerhalb des aktiven Armmoduls 5 weist das aktive Armmodul 5, wie in der Fig. 4 gezeigt ist, eine elektrische Rotationsübertragungseinrichtung 21 auf, die wiederum zwischen dem Gehäuse 10 und der Abtriebswelle 17 eine elektrische Schleifringeinrichtung 14 aufweist, die für eine Rotationsübertragung von elektrischer Energie zwischen der rotierbaren ersten Anschlusseinrichtung 30 der ersten Anschlussseite 11 und der gehäusefesten zweiten Anschlusseinrichtung 40 der zweiten Anschlussseite 12 sorgt. Die Schleifringeinrichtung 14 weist als Stator eine elektrischen Bürsteneinrichtung 141, die mit dem Gehäuse 10 fest verbunden ist, und als Rotor einen elektrische Gleitkontaktringeinrichtung 142, die an der Abtriebswelle 17 angeordnet ist, auf. Die elektrische Rotationsübertragungseinrichtung 21 ist derart konzipiert, dass, in Axialrichtung gesehen, die elektrische Gleitkontaktringeinrichtung 142 der Schleifringeinrichtung 14 an einem der rotierbaren ersten Anschlusseinrichtung 30 gegenüberliegenden Längsendabschnitt der Abtriebswelle 17 eingerichtet ist.

Ferner umfasst das aktive Armmodul 5, wie weiter in der Fig. 4 gezeigt ist, eine fluidische Rotationsübertragungseinrichtung 22 mit einer fluidischen Rotationsdurchführung 16 für eine Rotationsübertragung von Fluid innerhalb des aktiven Armmoduls 5, welche einen fluiddichten Übergang zwischen der rotierbaren ersten Anschlusseinrichtung 30 der ersten Anschlussseite 11 und der gehäusefesten zweiten Anschlusseinrichtung 40 der zweiten Anschlussseite 12 sicherstellt. Die fluidische Rotationsdurchführung 16 ist mehrkanalig ausgelegt und weist als Stator eine Fluidzuführeinrichtung 161, die mit dem Gehäuse 10 fest verbunden ist, und als Rotor Fluidleitungen 171, die in der Abtriebswelle 17 angeordnet sind, auf.

Hierbei kann die Rotationsdurchführung 16 wenigstens teilweise in der Schleifringeinrichtung 14 eingerichtet sein bzw. ferner die Schleifringeinrichtung 14 rotationslagern bzw. vice versa. Eine solche radiale Anordnung ist platzsparend und ermöglicht eine kleine Gesamtgröße.

Ausgehend von der rotierbaren ersten Anschlusseinrichtung 30 erstreckt sich die Abtriebswelle 17 in der Hohlwelle 133 durch die Getriebeeinrichtung 132, den Elektromotor 131, die fluidische Rotationsdurchführung 16 und die elektrische Schleifringeinrichtung 14 hindurch. Eine erste Lagerung der Abtriebswelle 17 erfolgt in einem Bereich der rotierbaren ersten Anschlusseinrichtung 30 mittels eines Lagers auf der Hohlwelle 133. Die Hohlwelle 133 wiederum ist mittels des Elektromotors 131, des Gehäuses 10 beispielsweise über ein Wälzlager und die Getriebeeinrichtung 132 gelagert. Eine zweite Lagerung der Abtriebswelle 17 erfolgt mittels eines Durchführungsgehäuses der fluidischen Rotationsdurchführung 16 beispielsweise über ein Wälzlager. Ferner kann die Abtriebswelle 17 alternativ oder zusätzlich durch die elektrische Gleitkontaktringeinrichtung 142 der elektrischen Schleifringeinrichtung 14 gelagert sein.

Im Bereich der mechanischen Schnittstelle 20 ist zwischen der rotierbaren ersten Anschlusseinrichtung 30 der ersten Anschlussseite 11 des einen aktiven Armmoduls 5 und der gehäusefesten zweiten Anschlusseinrichtung 40 der zweiten Anschlussseite 12 des anderen aktiven Armmoduls 5 eine optische Rotationsübertragungseinrichtung 500 eingerichtet, die in dem Ausführungsbespiel der Fig. 3 als eine erste optische Rotationsübertragungseinrichtung 501 ausgebildet ist. Die erste optische Rotationsübertragungseinrichtung 501 weist auf der bezüglich des einen aktiven Armmoduls 5 rotierbaren ersten Anschlusseinrichtung 30 die erste Signal-Schnittstelleneinrichtung 3041 auf, die als Rotor dient. In Axialrichtung Ar gegenüberliegend weist die erste optische Rotationsübertragungseinrichtung 501 als Stator die zweite optische Schnittstelleneinrichtung 4041 auf, die in der bezüglich des weiteren aktiven Armmoduls 5 gehäusefesten zweiten Anschlusseinrichtung 40 vorgesehen ist.

Fig. 4 zeigt weiter schematisch die Pfade der Rotationsübertragung, also einen optischen Signalpfad 25 für die optische Signalübertragung, einen Elektropfad 26 für die elektrische Strom- und Spannungsübertragung und einen Fluidpfad 27 für die Fluidübertragung in einem einzelnen aktiven Armmodul 5 aus Fig. 3, wobei die erste Anschlussseite 11 und die zweite Anschlussseite 12 des aktiven Armmodul 5 der in Fig. 2 gezeigten Ausgestaltung entsprechen.

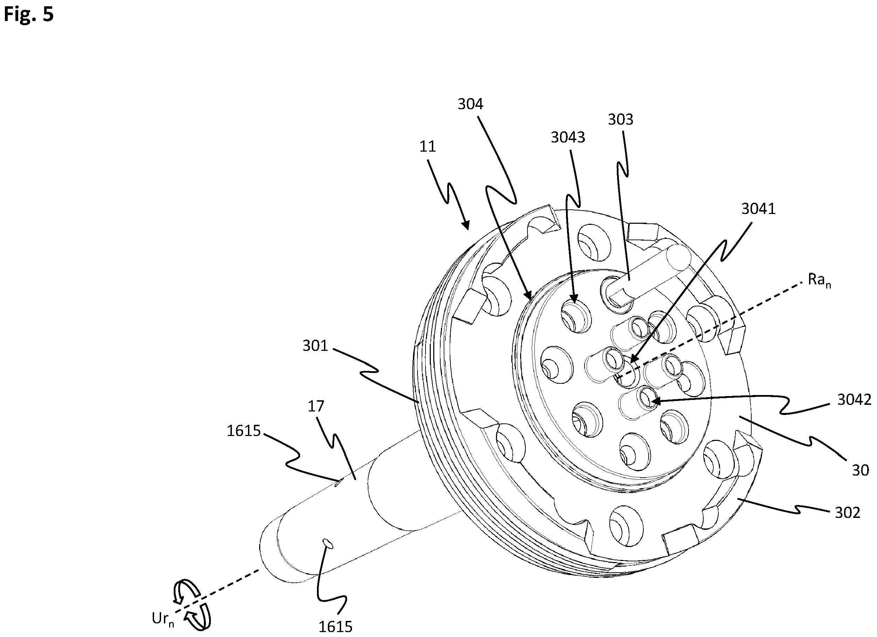

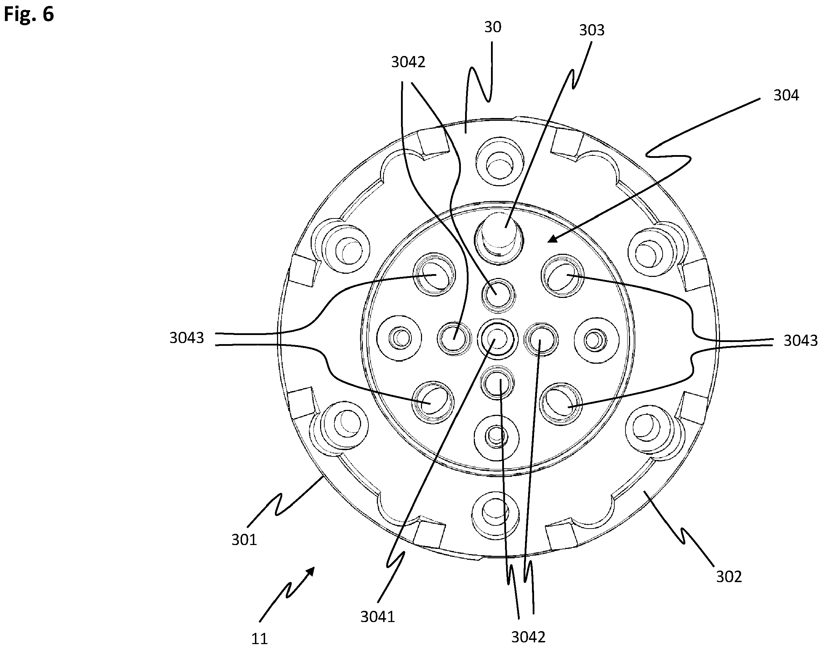

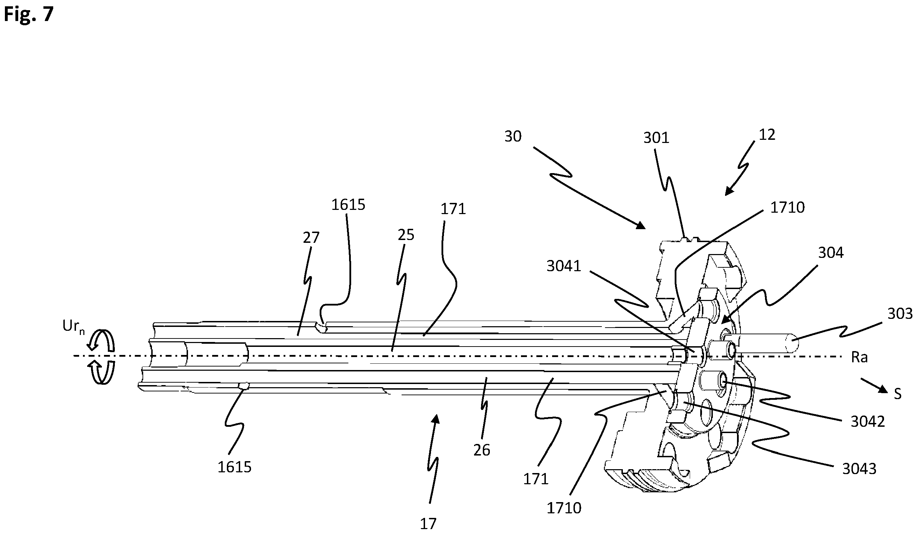

In Fig. 5 ist zur Verdeutlichung in einer Perspektivansicht die rotierbare Abtriebswelle 17 mit daran angeschlossener rotierbarer erster Anschlusseinrichtung 30 im aktiven Armmodul 5 aus Fig. 4 dargestellt. In Fig. 6 ist weiter eine Draufsicht der rotierbaren ersten Anschlusseinrichtung 30 wiedergeben. Fig. 7 zeigt in einer zentral geschnittenen, zweidimensionalen Seitenansicht die rotierbare Abtriebswelle 17 mit der daran angeschlossener rotierbarer Anschlusseinrichtung aus Fig. 5.

Das aktive Armmodul 5 besitzt den optischen Signalpfad 25, mit gepunkteter Linie dargestellt in Fig. 4, den Elektropfad 26, mit gestrichelter Line dargestellt in Fig. 4, und den Fluidpfad 27, mit durchgezogener Line dargestellt in Fig. 4. Die verschiedenen Pfade erstrecken sich dabei zwischen der rotierbaren ersten Anschlusseinrichtung 30 der ersten Anschlussseite 11 und der gehäusefesten zweiten Anschlusseinrichtung 40 der zweiten Anschlussseite 12 im aktiven Armmodul 5.

Der jeweilige Pfad soll hierbei eine jeweilige Gesamtheit aller möglichen optischen, elektrischen und fluidischen Wege innerhalb des aktiven Armmoduls 5 repräsentieren. So ist in der in Fig. 4 gezeigten Ausführungsform ein einziger optischer Weg im optischen Signalpfad 25, vier elektrische Wege im Elektropfad 26 und vier fluidische Wege im Fluidpfad 27 vorgesehen.

Im Folgenden werden die Pfadverläufe erläutert. Ein jeweiliger "Beginn" und ein jeweiliges "Ende" eines betreffenden Pfads sind untereinander vertauschbar.

Der optische Signalpfad 25 beginnt außen an der zweiten Signal-Schnittstelleneinrichtung 4041 der gehäusefesten zweiten Anschlusseinrichtung 40, die als Rotor einer ersten Signal-Rotationsübertragungseinrichtung 501 in Bezug auf ein mit der zweiten Anschlussseite 12 verbundenes weiteres Armmodul 4 dient. An der zweiten Signal-Schnittstelleneinrichtung 4041 ist der Lichtwellenleiter 119 optomechanisch angeschlossen. Der Lichtwellenleiter 119 führt zum Transceiver 15 auf der Platine der elektronischen Modul-Steuereinheit 18. Vom Transceiver 15 führt der Lichtwellenleiter 119 weiter durch die Abtriebswelle 17 der Antriebseinrichtung 13 hindurch zur rotierbaren ersten Anschlusseinrichtung 30. In der rotierbaren ersten Anschlusseinrichtung 30 ist der Lichtwellenleiter 119 optomechanisch an die erste Signal-Schnittstelleneinrichtung 3041 angeschlossen, die als Stator der ersten Signal-Rotationsübertragungseinrichtung 501 in Bezug auf ein mit der ersten Anschlussseite 11 verbundenes weiteres Armmodul 4 dient. Der Lichtleiter 119 wird dabei nicht rotbierbar in einer axial durchgehenden Bohrung, welche auch als Längsdurchgangsausnehmung bezeichnet werden kann, der Abtriebswelle 17 geführt. Außen an der ersten Signal-Schnittstelleneinrichtung 3041 der rotierbaren ersten Anschlusseinrichtung 30 endet der optische Signalpfad 25. Statt einer Lichtleiterverbindung kann auch eine elektrische Datenleitung verwendet werden.

Der Elektropfad 26 beginnt außen an der zweiten elektrischen Schnittstelleneinrichtung 4042 der gehäusefesten zweiten Anschlusseinrichtung 40. Die elektrische Schnittstelleneinrichtung 4042 besitzt vier elektrische Gegenverbindungseinrichtungen (nur zwei gezeigt), an welchen jeweils ein elektrischer Leiter (nicht gezeigt) elektromechanisch angeschlossen ist. Die elektrischen Leiter führen zur Antriebseinrichtung 13 und zur Modul-Steuereinheit 18, um diese mit elektrischer Spannung bzw. elektrischen Strom zu versorgen. Von der Antriebseinrichtung 13 und der Modul-Steuereinheit 18 führen dann jeweils elektrische Leiter (nicht gezeigt) weiter zu der elektrischen Bürsteneinrichtung 141 der elektrischen Schleifringeinrichtung 14, die als Stator dient. Die Bürsteneinrichtung 141 der Schleifringeinrichtung 14 überträgt die elektrische Energie auf die elektrische Gleitkontaktringeinrichtung 142 der Schleifringeinrichtung 14, die als Rotor dient und an der Abtriebswelle 17 angeordnet ist. Die Gleitkontaktringeinrichtung 142 der Schleifringeinrichtung 14 ist an vier in der Abtriebswelle 17 vorgesehenen elektrischen Leiter (nicht gezeigt) angeschlossen. Die vier elektrischen Leiter in der Abtriebswelle 17 münden in vier elektrische Verbindungseinrichtungen (nur eine gezeigt), die Teile der ersten elektrischen Schnittstelleneinrichtung 3042 der rotierbaren ersten Anschlusseinrichtung 30 sind und in welcher der Elektropfad 26 außen am aktiven Armmodul 5 endet. Zwei der elektrischen Leiter dienen zum Versorgen der Antriebseinrichtung 13 und der Modul-Steuereinheit 18 mit dem Transceiver 15. Die anderen beiden Leiter können anwenderspezifisch beispielsweise zum Versorgen eines (End-)Effektor verwendet werden.

Ein zusätzlicher elektrischer Pfad des aktiven Armmoduls 5 ist ausgebildet zwischen der Zentrieraufnahme 403 an zweiten Anschlusseinrichtung 40, die einen Zentrierstift 303 eines daran angeordneten weiteren Armmoduls 4 aufnehmen kann. Dieser weitere elektrische Pfad dient als Potentialausgleich zwischen den einzelnen Armmodulen 4. Von der Zentrieraufnahme sind über elektrische Leiter (nicht gezeigt) ebenfalls die Antriebseinrichtung 13 und die Modul-Steuereinheit 18 und das Gehäuse 10 elektrisch angebunden. Von der Antriebseinrichtung 13 und der Modul-Steuereinheit 18 führen dann jeweils elektrische Leiter (nicht gezeigt) weiter zu der elektrischen Bürsteneinrichtung 141 der elektrischen Schleifringeinrichtung 14, die als Stator dient. Die Bürsteneinrichtung 141 der Schleifringeinrichtung 14 ist elektrisch verbunden mit der elektrische Gleitkontaktringeinrichtung 142 der Schleifringeinrichtung 14, die als Rotor dient und an der Abtriebswelle 17 angeordnet ist. Die Gleitkontaktringeinrichtung 142 der Schleifringeinrichtung 14 ist zum Potentialausgleich elektrisch an die Abtriebswelle 17 angebunden. Die Abtriebswelle 17 wiederum ist elektrisch mit dem Zentrierstift 303 verbunden, der in der ersten Anschlussseite 30 angeordnet ist. Der Zentrierstift 303 in Verbindung mit der Zentrierhülse 403 dienen somit nicht nur zur einfacheren Montage von zwei Armmodulen 4 zueinander, sondern stellen zusätzlich einen erforderlichen elektrischen Potentialausgleich bereit. Die beiden beschriebenen elektrischen Pfade bilden somit zusammen den Elektropfad 26 des Armmoduls 4.

Der Fluidpfad 27 beginnt außen an der zweiten fluidischen Schnittstelleneinrichtung 4043 der gehäusefesten zweiten Anschlusseinrichtung 40. Die zweite fluidische Schnittstelleneinrichtung 4043 besitzt vier fluidische Gegenverbindungseinrichtungen (nur eine gezeigt), an welchen jeweils eine Fluidtransportleitung (nicht gezeigt) fluidmechanisch angeschlossen ist. Die Fluidtransportleitungen führen zu der Fluidzuführungseinrichtung 161 der fluidischen Rotationsdurchführung 16, die als Stator dient. Die Fluidzuführungseinrichtung 161 der Rotationsdurchführung 16 überträgt das durch die Fluidtransportleitungen transportierbare Fluid auf die vier in der Fluidzuführeinrichtung 161 ausgebildeten Umfangsfluidkanäle 1616. Die Abtriebswelle 17 dient als Rotor und weist vier Fluidleitungsdurchgangsbohrungen 1615 auf, die jeweils einem Umfangsfluidkanal 1616 zugeordnet sind. Das in dem jeweiligen Umfangsfluidkanal 1616 befindliche Fluid kann somit während der Drehung der Abtriebswelle 17 durch die jeweils zugeordnete Fluidleitungsdurchgangsbohrung 1615 in eine Fluidleitung 171 überführt werden. In der Abtriebswelle 17 sind vier Fluidleitungen 171 als Längsbohrungen ausgebildet. Die vier Fluidleitungen 171 münden in vier in der ersten Anschlusseinrichtung 30 ausgebildeten Fluidverbindungsleitungen 1710, welche in vier Fluidsteckverbindungseinrichtungen (nur eine gezeigt) münden, die Teile der ersten fluidischen Schnittstelle 3043 der rotierbaren ersten Anschlusseinrichtung 30 sind und in welcher der Fluidpfad 27 außen am aktiven Armmodul 5 endet.

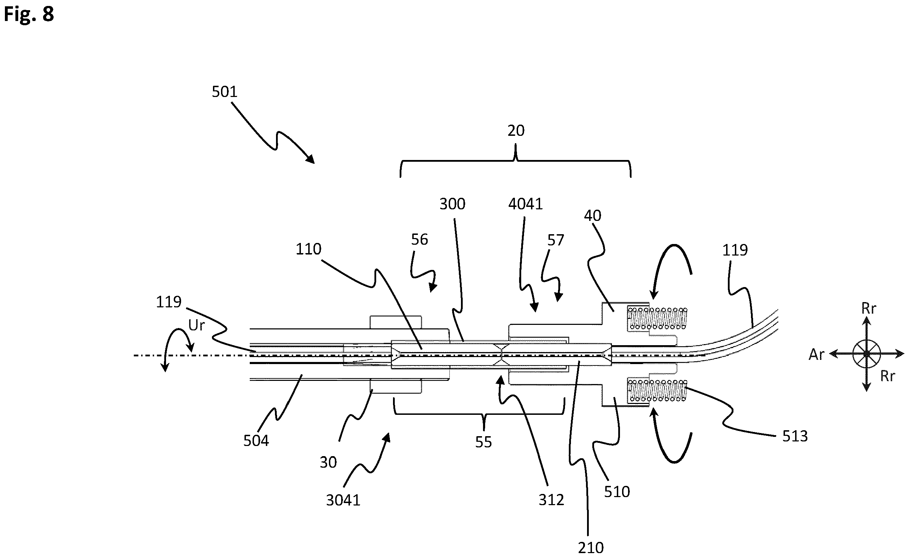

Im Folgenden wird anhand der Fig. 8 eine Detailansicht einer Ausführungsform der ersten Signal-Rotationsübertragungseinrichtung 501 aus der Fig. 3 näher erläutert, die als optische Rotationsübertragungseinrichtung ausgebildet ist. In der Fig. 8 ist auch das polare Koordinatensystem aus der Fig. 2 mit der Axialrichtung Ar, der Radialrichtung Rr, der Umfangsrichtung Ur und der zugeordneten Rotationsachse Ra zur Verdeutlichung der Orientierung der einzelnen Bauelemente angezeigt.

Die erste Signal-Rotationsübertragungseinrichtung 501 ist in der mechanischen Schnittstelle 20 zwischen den zwei aktiven Armmodulen 5 eingerichtet und konstituiert eine optomechanische Rotations-Schnittstelle 55. Die mechanische Schnittstelle 20 umfasst einerseits die rotierbare erste Anschlusseinrichtung 30 des einen aktiven Armmoduls 5. Andererseits umfasst die mechanische Schnittstelle 20 die gehäusefeste zweite Anschlusseinrichtung 40 des weiteren aktiven Armmoduls 5.

Die erste Signal-Rotationsübertragungseinrichtung 501 weist auf der bezüglich des einen aktiven Armmoduls 5 rotierbaren ersten Anschlusseinrichtung 30 eine erste Schnittstellenseite 56 mit der ersten Signal-Schnittstelleneinrichtung 3041 auf, die als Rotor dient. In Axialrichtung Ar gegenüberliegend weist die erste Signal-Rotationsübertragungseinrichtung 501 auf der bezüglich des weiteren aktiven Armmoduls 5 gehäusefesten zweiten Anschlusseinrichtung 40 eine zweite Schnittstellenseite 57 mit der zweiten Signal-Schnittstelleneinrichtung 4041 auf, die als Stator dient. Das weitere aktive Armmodul 5 ist dabei mittels des aktiven Armmoduls 5 rotierbar.

Die erste Signal-Schnittstelleneinrichtung 3041 umfasst radial innen eine erste Ferrule 110 mit dem daran mechanisch und optisch angeschlossenen Lichtwellenleiter 119 des einen aktiven Armmoduls 5. Radial außen auf einem Außenumfangsrand der ersten Ferrule 110 ist eine Radiallagerhülse 300 angeordnet, die ein Radialgleitlager bildet. Hierbei sitzt die Radiallagerhülse 300 mit einem gebundenen ersten Längsendabschnitt auf der ersten Ferrule 110 und steht von einem freien Längsende der ersten Ferrule 110 mit einem freien zweiten Längsendabschnitt in eine Axialrichtung Ar ab.

Die Radiallagerhülse 300 ist zusammen mit der ersten Ferrule 110 in einer ersten Aufnahme 504 der rotierbaren ersten Anschlusseinrichtung 30 vorgesehen, insbesondere festgelegt. Die erste Aufnahme 504 kann beispielsweise als ein Rohr, eine Hülse etc. ausgebildet sein. Vorliegend ist die erste Aufnahme 504 insbesondere als ein Messingrohr ausgebildet. Die erste Aufnahme 504 kann eine Einrichtung, beispielsweise eine Bohrung, und/oder eine Vorrichtung für eine Fixierung des Lichtwellenleiters 119, der ersten Ferrule 110 und/oder der Radiallagerhülse 300 aufweisen.

Die erste Aufnahme 504 ist bevorzugt innerhalb der Abtriebswelle 17 angeordnet. Die erste Aufnahme 504 kann dabei einteilig mit der Abtriebswelle 17 vorgesehen oder teilweise stofflich einstückig oder integral mit der Abtriebswelle 17 ausgebildet sein. Über die erste Aufnahme 504 ist die erste Schnittstellenseite 56 so drehfest mit der Abtriebswelle 17 der Wellenanordnung 19 verbunden.

Die zweite Signal-Schnittstelleneinrichtung 4041 umfasst ebenfalls radial innen eine zweite Ferrule 210 mit dem daran mechanisch und optisch angeschlossenen Lichtwellenleiter 119 des weiteren aktiven Armmoduls 5. Die zweite Ferrule 210 ist in einer zweiten Aufnahme 510 der gehäusefesten zweiten Anschlusseinrichtung 40 des weiteren aktiven Armmoduls 5 eingerichtet, wobei ein einem freien Längsende der zweiten Ferrule 210 abgewandter Abschnitt der zweiten Ferrule 210 in der Axialrichtung Ar (nach rechts mit Bezug auf die Fig. 8) in der zweiten Aufnahme 510 vorgesehen, insbesondere festgelegt, ist. Ein in die andere Axialrichtung Ar (nach links mit Bezug auf die Fig. 8) wegstehender Abschnitt der zweiten Ferrule 210 mit dem freien Längsende der zweiten Ferrule 210 ist außen als Gleitlagerschale für die radial innere Fläche der Radiallagerhülse 300 ausgebildet. Ein vom freien Längsende der zweiten Ferrule 210 ausgehender Abschnitt der zweiten Ferrule 210 ist innerhalb der zweiten Aufnahme 510 eingerichtet und vollumfänglich radial beabstandet zur zweiten Aufnahme 510 vorgesehen. D. h. die zweite Aufnahme 510 ist entsprechend ausgenommenen. Die Ausnehmung zwischen dem Abschnitt der zweiten Ferrule 210 und der zweiten Aufnahme 510 ist bevorzugt hohlzylindrisch ausgebildet und dient einer Aufnahme des in die Axialrichtung Ar von der ersten Ferrule 110 wegstehenden zweiten freien Längsendabschnitts der Radiallagerhülse 300. Der Abschnitt der zweiten Ferrule 210 mit dem freien Längsende dient außen als Gleitlagerschale für die radial innere Fläche des zweiten freien Längsendabschnitts der Radiallagerhülse 300.

Die zweite Ferrule 210 ist über die zweite Aufnahme 510 der gehäusefesten zweiten Anschlusseinrichtung 40 gegenüber dem Gehäuse 10 ortsfest am bzw. im weiteren aktiven Armmodul 5 eingerichtet. Die zweite Aufnahme 510 kann eine Einrichtung, beispielsweise eine Bohrung, und/oder eine Vorrichtung für eine Fixierung des Lichtwellenleiters 119 und/oder der zweiten Ferrule 210 aufweisen.

Es ist bevorzugt, dass die zweite Aufnahme 510 mittels einer oder mehrerer Federn 513 gegen die erste Aufnahme 504 mechanisch vorgespannt ist. Statt einer Feder 513 ist auch ein Elastikelement anwendbar. Zeitlich nach einem Zusammenstecken der Rotations-Schnittstelle 55 bzw. der aktiven Armmodule 5, also bei der eingerichteten ersten optischen Rotationsübertragungseinrichtung 501 ist zwischen den beiden in der Radiallagerhülse 300 vorgesehenen Längsendabschnitten der ersten Ferrule 110 und der zweiten Ferrule 210 ein Spalt 312 eingerichtet, sodass die beiden freien Längsenden der Ferrulen nicht in einem mechanischen Rotationschleifkontakt sind. Der Spalt 312 ist bevorzugt als ein Fluidspalt, insbesondere als ein Luftspalt, eingerichtet. Der Spalt kann auf verschiedene Arten und Weisen zwischen den Längsendabschnitten der Ferrulen innerhalb der Radiallagerhülse 300 sichergestellt werden.

Der Spalt 312 ist beispielsweise über die Positionen der Ferrulen in der rotierbaren ersten Anschlusseinrichtung 30 und in der gehäusefesten zweiten Anschlusseinrichtung 40 sicherstellbar, wobei deren Positionen wiederum gegenüber dem betreffenden Gehäuse sichergestellt sein müssen. Ferner ist hierfür beispielsweise ein axial gegenseitig gelagertes, beispielsweise gleitgelagertes, Ansitzen der Aufnahmen möglich. Des Weiteren kann der Spalt 312 mittels der mechanischen Schnittstelle 20 realisiert sein, welche derart ausgebildet und einrichtbar ist, dass sich bei einer bestimmten Ausbildung der ersten optischen Rotationsübertragungseinrichtung 501 der Spalt 312 einrichtet.

Die optische Signalübertragung erfolgt in der optomechanischen Rotations-Schnittstelle 55 zwischen der ersten Schnittstellenseite 56 und der zweiten Schnittstellenseite 57 über den Spalt 312. Die erste Schnittstellenseite und die zweite Schnittstellenseite sind gegeneinander rotierbar eingerichtet. Die erste Schnittstellenseite 56 und die zweite Schnittstellenseite 57 sind untereinander mechanisch radialgleitgelagert. Das Radialgleitlager und die dazu komplementäre Gleitlagerschale werden dabei in der in Fig. 8 gezeigten Ausführungsform durch die erste Ferrule 110, die zweite Ferrule 210 und die Radiallagerhülse 300 gebildet, wobei die erste Ferrule 110 und die zweite Ferrule 210 jeweils wenigstens abschnittsweise innerhalb der Radiallagerhülse 300 gegeneinander rotierbar eingerichtet sind.

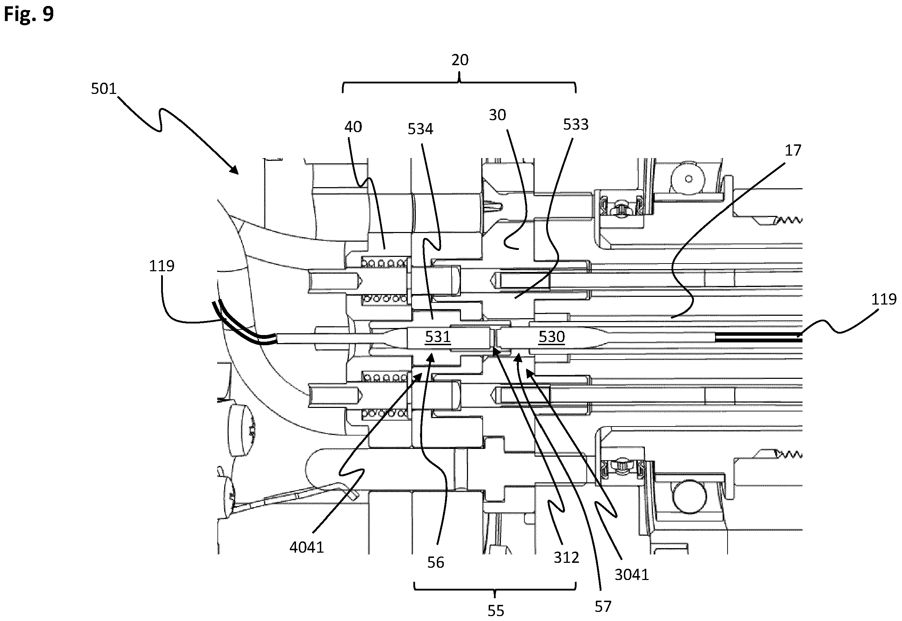

Die Fig. 9 zeigt eine veränderte Ausführungsform der ersten optischen Rotationsübertragungseinrichtung 501 gemäß der Fig. 8. Bei der veränderten Ausführungsform der ersten optischen Rotationsübertragungseinrichtung 501 werden Linsen anstelle von Ferrulen verwendet.

Die erste Signal-Schnittstelleneinrichtung 3041, die als Rotations-Steckeinrichtung dient, umfasst radial innen eine erste Linse 530 mit dem daran mechanisch und optisch angeschlossenen Lichtwellenleiter 119 des einen aktiven Armmoduls 5. Radial außen auf einem Außenumfangsrand der ersten Linse 530 ist eine erste Linsenaufnahme 533 angeordnet. Die erste Linsenaufnahme 533 ist mit einem gebundenen ersten Abschnitt auf dem hinteren Teil der ersten Linse 530 fixiert. Zwischen einem an den ersten Abschnitt anschließenden zweiten Abschnitt der ersten Linsenaufnahme 533 und dem vorderen Teil der ersten Linse 530 ist ein hohlzylinderförmiger Eingriffsraum ausgebildet. Der zweite Abschnitt der ersten Linsenaufnahme 533 steht dabei über die Oberfläche der zweiten Linse 530 in Axialrichtung vor.

Die erste Linsenaufnahme 533 ist weiterhin drehfest mit der Abtriebswelle 17 verbunden. Die erste Linsenaufnahme 533 kann dabei einteilig mit der Abtriebswelle 17 vorgesehen oder teilweise stofflich einstückig oder integral mit der Abtriebswelle 17 ausgebildet sein.

Die zweite Signal-Schnittstelleneinrichtung 4041, die als Rotations-Gegensteckeinrichtung dient, umfasst radial innen eine zweite Linse 531 mit dem daran mechanisch und optisch angeschlossenen Lichtwellenleiter 119 des weiteren aktiven Armmoduls 5. Radial außen auf einem Außenumfangsrand der zweiten Linse 531 sitzt eine zweite Linsenaufnahme 534 mit einem gebundenen ersten Abschnitt auf dem hinteren Teil der ersten Linse 530 auf. An den ersten Abschnitt der zweiten Linsenaufnahme 534 schließt sich ein freier zweiter Abschnitt an, der von der Oberfläche der zweiten Linse 530 in Axialrichtung vorsteht.

Der freie zweite Abschnitt der zweiten Linsenaufnahme 534 ist zylinderförmig ausgebildet und greift bei zusammengebauten Armmodulen 5, wenn die rotierbare erste Anschlusseinrichtung 30 und die gehäusefeste zweite Anschlusseinrichtung 40 aufeinander liegen und in der in Zusammenhang mit der Fig. 3 erläuterten Weise montiert wurden, in den hohlzylinderförmigen Eingriffsraum, der zwischen dem zweiten Abschnitt der ersten Linsenaufnahme 533 und dem vorderen Teil der ersten Linse 530 ausgebildet ist, ein. Der zweite Abschnitt der ersten Linsenaufnahme 533 dient dabei mit der den hohlzylinderförmigen Eingriffsraum bildenden inneren Fläche als Gleitlagerschale für die radial äußere Fläche des zweiten Abschnitts der zweiten Linsenaufnahme 534.

Bei der in der Fig. 9 gezeigten Variante der ersten optischen Rotationsübertragungseinrichtung 501 erfolgt die optische Signalübertragung von dem Lichtleiter 119 des aktiven Armmoduls 5 über die erste Linse 350 des aktiven Armmoduls 5, den Luftspalt 312 zwischen der ersten Linse 350 des aktiven Armmoduls 5 und der zweiten Linse 351 des weiteren aktiven Armmoduls 5, die zweite Linse 531 des weiteren aktiven Armmoduls 5 zu dem Lichtleiter 119 des weiteren aktiven Armmoduls 5.

Die Verwendung eines Linsen-Systems, wie es in Fig. 9 gezeigt ist, hat gegenüber dem in der Fig. 8 gezeigten Aufbau mit einem Ferrulen-System den Vorteil, dass die optische Signalübertragung mithilfe von Linsen keine so genaue Ausrichtung der Linsen zueinander im Vergleich zu den Ferrulen erforderlich macht, weshalb eine Radiallagerausgestaltung durch die Linsenaufnahmen ohne zusätzliche Radiallagerhülse ausreicht.

Bei den in Fig. 8 und Fig. 9 gezeigten Ausführungsformen erfolgt die Signal-Rotationsübertragung optisch mit Hilfe der optomechanischen Rotations-Schnittstelle 55 zwischen der ersten Schnittstellenseite 56 und der zweiten Schnittstellenseite 57 über den Spalt 312. Statt einer optomechanischen Rotations-Schnittstelle kann auch eine andere drahtlose Rotations-Schnittstelle für eine Übertragung modulierter elektromagnetischer Wellen über den Spalt verwendet werden. Die erste Schnittstellenseite und die zweiten Schnittstellenseite der Rotations-Schnittstelle bilden dann eine Sender-Empfänger-Anordnung. Sender bzw. Empfänger werden dabei entsprechend dem verwendeten Frequenzbereich ausgewählt. So kann eine Richtfunkübertragung über den Spalt hinweg mit einem Funkchip als Sender auf einer Schnittstellenseite und einer Antenne als Empfänger auf der anderen Schnittstellenseite eingesetzt werden. Alternativ kann auch eine Signalübertragung mit einem Licht- oder Infrarotstrahl erfolgen. Als Sender kann eine Leuchtdiode, eine Laserdiode oder ein Halbleiterlaser verwendet. Die Kollimation kann mit Linsen wie bei der Ausführungsform nach Fig. 9 erfolgen. Als Empfänger dient eine Fotodiode. Die Schnittstellenseite mit dem Sender und die Schnittstellenseite mit dem Empfänger sind gegeneinander rotierbar eingerichtet, um eine Signal-Rotationsübertragung zu ermöglichen. Für eine bidirektionale Signalübertragung weist jede Schnittstellenseite der Rotations-Schnittstelle eine kombinierte Sender-Empfänger-Anordnung auf.

Bei den anhand der Fig. 8 und Fig. 9 erläuterten Ausgestaltungen der ersten Signal-Rotationsübertragungseinrichtung 501 ist die Rotations-Schnittstelle 55 als Abschnitt der mechanischen Schnittstelle 20 zwischen zwei aktiven Armmodulen 5 ausgebildet. Es ist möglich, die Rotations-Schnittstelle 55 im aktiven Armmodul 5 selbst vorzusehen.

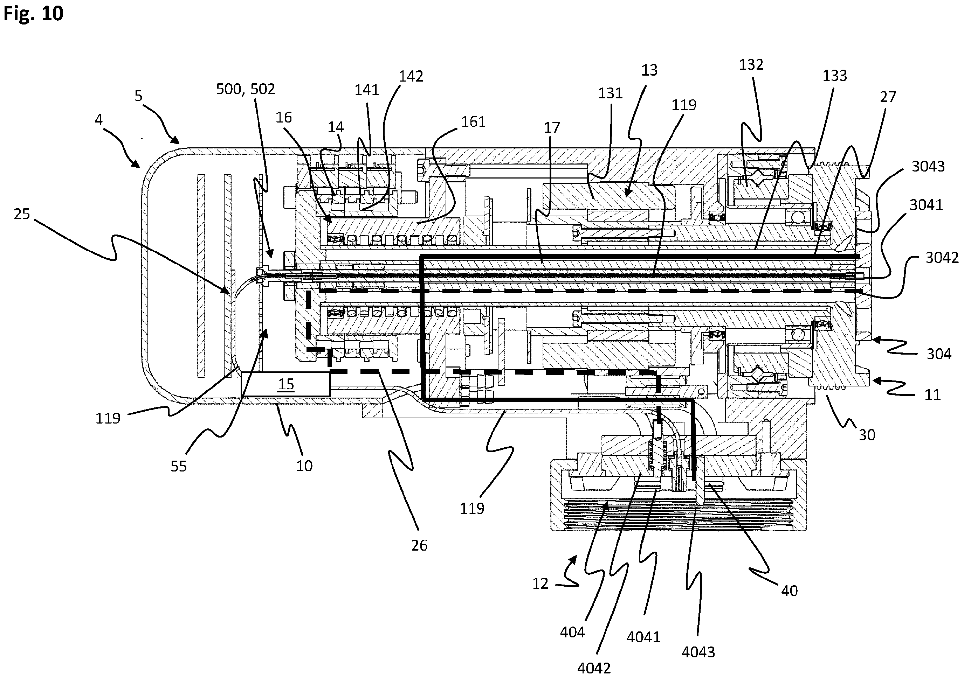

Die Fig. 10 zeigt in einer Schnittansicht, ein zu der Fig. 4 alternatives aktives Armmodul 5 des Industrieroboters gemäß Fig. 1 mit einer zweiten Signal-Rotationsübertragungseinrichtung 502, die abseits der mechanischen Schnittstelle 20 im Armmodul 5 angeordnet ist. Das in der Fig. 10 gezeigte aktive Armmodul 5 ist im Wesentlichen identisch zu dem aktiven Armmodul in der Fig. 3 aufgebaut, weshalb für die Bestandteile dieselben Bezugszeichen verwendet werden. Das aktive Armmodul 5 in der in der Fig. 10 dargestellten abgewandelten Ausführungsform weist aber eine geänderte Außenform des Gehäuses 10 auf.

Im Folgenden wird bei dem aktiven Armmodul 5 in Fig. 10 der optische Signalpfad 25, der sich zwischen der ersten Signal-Schnittstelleneinrichtung 3041 in der ersten Kontakteinrichtung 304 und der zweiten Signal-Schnittstelleneinrichtung 4041 in der zweiten Kontakteinrichtung 404 erstreckt, erläutert. Der Elektropfad 26 und der Fluidpfad 27 im aktiven Armmodul 5 mit den zugeordneten Schnittstelleneinrichtungen entsprechen im Wesentlichen der anhand der Fig. 4 beschriebenen Ausgestaltung.

Die mechanische Rotationsübertragung innerhalb des aktiven Armmoduls 5 in Fig. 10 erfolgt in gleicher Weise, wie bei dem aktiven Armmodul 5 in Fig. 3. Die Antriebseinrichtung 13 rotiert die mit der Abtriebswelle 17 drehfest verbundene erste Anschlusseinrichtung 30 der ersten Anschlussseite 11 des aktiven Armmoduls 5 gegen das Gehäuse 10 und damit gegen die gehäusefeste zweite Anschlusseinrichtung 40 der zweiten Anschlussseite 12.

Zur elektrischen Rotationsübertragung innerhalb des aktiven Armmoduls 5 in Fig. 10 weist das aktive Armmodul 5 zwischen dem Gehäuse 10 und der Abtriebswelle 17 die elektrische Schleifringeinrichtung 14 auf, die für eine Rotationsübertragung von elektrischer Energie zwischen der rotierbaren ersten Anschlusseinrichtung 30 der ersten Anschlussseite 11 und der gehäusefesten zweiten Anschlusseinrichtung 40 der zweiten Anschlussseite 12 sorgt. Die Schleifringeinrichtung 14 weist als Stator die elektrische Bürsteneinrichtung 141, die mit dem Gehäuse 10 fest verbunden ist, und als Rotor die elektrische Gleitkontaktringeinrichtung 142, die an der Abtriebswelle 17 angeordnet ist, auf.

Im aktiven Armmodul 5 in Fig. 10 sorgt weiter die fluidische Rotationsdurchführung 16 für eine Rotationsübertragung von Fluid innerhalb des aktiven Armmoduls 5, wobei als Stator die Fluidzuführeinrichtung 161, die mit dem Gehäuse 10 fest verbunden ist, und als Rotor die Abtriebswelle 17 wirkt.

Der optische Signalpfad 25 des aktiven Armmoduls 5 in der Fig. 10 ist so ausgestaltet, dass der Lichtleiter 119 die ersten und zweiten Anschlussseiten 11, 12 innerhalb des Gehäuses 10 mit dem Transceiver 15 über die zweite Rotationsübertragungseinrichtung 502 verbindet. Die optische Datenübertragung im Gehäuse 10 des aktiven Armmoduls 5 erfolgt ausgehend von der ersten Signal-Schnittstelleneinrichtung 3041 in der ersten Kontakteinrichtung 304 der rotierbaren ersten Anschlusseinrichtung 30 über den Lichtleiter 119, der in der Abtriebswelle 17 verläuft, zu der zweiten Rotationsübertragungseinrichtung 502. Von der zweiten Rotationsübertragungseinrichtung 502 erfolgt dann die optische Datenübertragung weiter über den Lichtleiter 119 zu dem Transceiver 15 und von dort über den Lichtwellenleiter 119 zu der zweiten Signal-Schnittstelleneinrichtung 4041 in der zweiten Kontakteinrichtung 404 der gehäusefesten zweiten Anschlusseinrichtung 40. Die optische Datenübertragung kann dabei bidirektional erfolgen. Statt eine Lichtwellenübertragung im Lichtleiter 119 kann auch elektrische Signalübertragung über ein Datenkabel erfolgen.

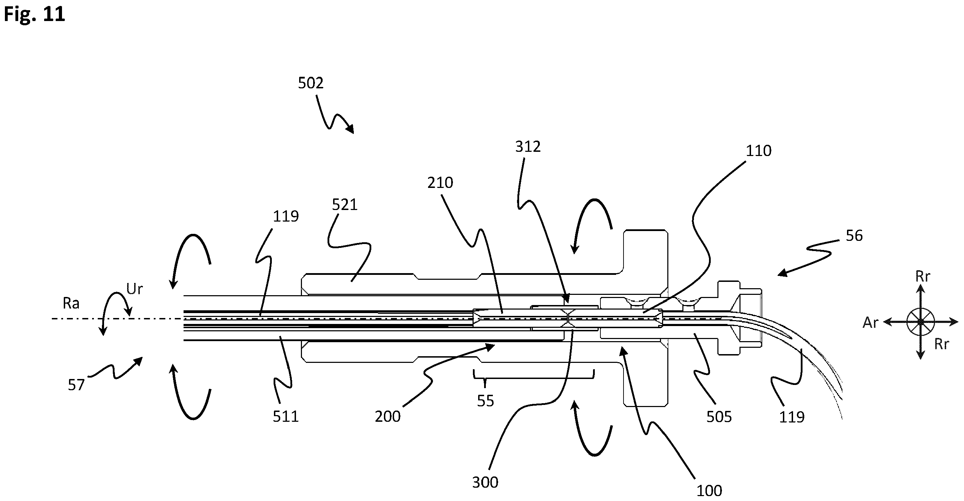

Im Folgenden wird anhand der Fig. 11 eine vergrößert dargestellte und im Verhältnis zur Darstellung in der Fig. 10 um 180° gedrehte Ausführungsform der zweiten Signal-Rotationsübertragungseinrichtung 502 in Fig. 10 näher erläutert. Die Ausführungsform der zweiten Signal-Rotationsübertragungseinrichtung 502 in der Fig. 11 ist zur Ausführungsform der ersten Signal-Rotationsübertragungseinrichtung 501 in der Fig. 8 teilweise kinematisch umgekehrt.

Die zweite Signal-Rotationsübertragungseinrichtung 502 umfasst auf einer Statorseite (rechts in der Fig. 11) die erste optomechanische Schnittstellenseite 56 mit einer dort vorgesehenen Rotations-Steckeinrichtung 100. In Axialrichtung Ar gegenüberliegend umfasst die zweite Rotationsübertragungseinrichtung 502 die zweite optomechanische Schnittstellenseite 57 mit einer Rotations-Gegensteckeinrichtung 200 auf einer Rotorseite (links in der Fig. 11).

Die Rotations-Steckeinrichtung 100 umfasst radial innen die erste optische Ferrule 110 mit dem daran mechanisch und optisch angeschlossenen Lichtwellenleiter 119. Die erste Ferrule 110 ist in einer ersten Aufnahme 505 eingerichtet, wobei ein einem freien Längsende abgewandter Längsendabschnitt der ersten Ferrule 110 in der Axialrichtung Ar (nach rechts mit Bezug auf Fig. 11) in der ersten Aufnahme 505 vorgesehen, insbesondere festgelegt, ist. Ein in die Axialrichtung Ar (nach links mit Bezug auf die Fig. 11) sich erstreckender, dem freien Längsende zugewandter Abschnitt der ersten Ferrule 110 dient außen als Gleitlagerschale für eine radial innere Fläche der Radiallagerhülse 300.

Die als Radialgleitlager ausgebildete Radiallagerhülse 300 ist dabei radial außen auf einem Außenumfangsrand der ersten Ferrule 110 angeordnet. Hierbei sitzt die Radiallagerhülse 300 lediglich mit einem gebundenen Längsendabschnitt auf einer zweiten Ferrule 210 und steht von einem freien Längsende der ersten Ferrule 110 in die Axialrichtung Ar (nach rechts mit Bezug auf die Fig. 11) ab.

Die Radiallagerhülse 300 ist zusammen mit einem zweiten Abschnitt der zweiten Ferrule 210, der sich von ihr in die Axialrichtung Ar erstreckt (nach links mit Bezug auf die Fig. 11),in einer zweiten Aufnahme 511 aufgenommen, insbesondere festgelegt. Die zweite Aufnahme 511 kann beispielsweise als ein Rohr, eine Hülse etc. ausgebildet sein. Vorliegend ist die zweite Aufnahme 511 insbesondere als ein Messingrohr ausgebildet. Die zweite Aufnahme 511 ist innen in der Abtriebswelle 17 bevorzugt mit der Abtriebswelle 17 mit rotierbar aufgenommen; d. h. die erste Ferrule 1110 und die Radiallagerhülse 300 sind gegenüber dem Gehäuse fest im aktiven Armmodul 5 eingerichtet.

Hierbei kann die zweite Aufnahme 511 innerhalb einer zentralen Durchgangsausnehmung einer Lagerhülse 521 aufgenommen sein, welche die zweite Aufnahme 511 in der Abtriebswelle 17 mit rotierbar lagert. In einem Bereich eines gehäuseinneren freien Endes der Abtriebswelle 17, also abseits der rotierbaren erste Anschlusseinrichtung 30, kann die Lagerhülse 521 von der Abtriebswelle 17 ab- und nach innen in das Gehäuse 10 hervorstehen. Ferner kann sich die zweite Aufnahme 511 im Wesentlichen durch die Abtriebswelle 17 hindurch erstrecken und an einem der rotierbaren Anschlusseinrichtung 30 benachbarten Ende eine bevorzugt drehfeste optische Weiterkontaktierung aufweisen. Die zweite Aufnahme 511 kann eine Einrichtung, beispielsweise eine Bohrung, und/oder eine Vorrichtung für eine Fixierung des Lichtwellenleiters 119 der zweiten Ferrule 210 und/oder der Radiallagerhülse 300 aufweisen. Ferner kann ein Außenumfangsrand der zweiten Ferrule 210 radial innerhalb der Radiallagerhülse 300 ggf. ebenfalls als Gleitlagerschale fungieren. In einem solchem Fall kann die Radiallagerhülse 300 gegenüber der ersten Ferrule 110 rotierbar eingerichtet sein. Es ist möglich, die Radiallagerhülse 300 analog auf der axial gegenüberliegenden ersten Ferrule 110 vorzusehen.

Ein vom freien Längsende der ersten Ferrule 110 ausgehender freier Längsendabschnitt der ersten Ferrule 110 und ggf. ein sich daran anschließender Längsabschnitt der ersten Aufnahme 505 ist bzw. sind für ein Einrichten der zweiten optischen Rotationsübertragungseinrichtung 502 stirnseitig abseits der rotierbaren Anschlusseinrichtung in die zentrale Durchgangsausnehmung der Lagerhülse 521 vorbewegbar. Hierbei kann insbesondere der Längsendabschnitt der ersten Aufnahme 505 in der Durchgangsausnehmung der Lagerhülse 521 aufgenommen oder gelagert, insbesondere gleitgelagert sein.

Für das Einrichten der zweiten Signal-Rotationsübertragungseinrichtung 502 wird das freie Längsende der ersten Ferrule 110 bevorzugt mit dem sich daran anschließenden Längsendabschnitt der ersten Aufnahme 505 in die Durchgangsausnehmung der Lagerhülse 521 vorbewegt. Die Lagerhülse 521 befindet sich dabei bevorzugt schon in der Abtriebswelle 17. Hierbei kommt zuerst das freie Längsende der ersten Ferrule 110 in mechanischen Kontakt mit der Radiallagerhülse 300, wobei das freie Längsende darin zentriert ist. Anschließend wird die erste Ferrule 110 über die erste Aufnahme 505 derart weit in die Radiallagerhülse 300 vorbewegt, bis sich ein gewünschter Spalt 312 einrichtet.

Der Spalt 312 ist bevorzugt wiederum als ein Fluidspalt, insbesondere ein Luftspalt, eingerichtet. Der Spalt 312 kann auf verschiedene Arten und Weisen zwischen den Längsendabschnitten der Ferrulen innerhalb der Radiallagerhülse 300 sichergestellt werden. Der Spalt 312 ist beispielsweise über die Positionen der Ferrulen in den Aufnahmen sicherstellbar, wobei deren Positionen wiederum gegenüber dem Gehäuse sichergestellt sein müssen. Die erste Aufnahme 505 kann beispielsweise mittels einer Feder (in der Fig. 11 nicht dargestellt) gegen die zweite Aufnahme 511 mechanisch vorgespannt eingerichtet sein.

Statt einer optomechanischen Rotations-Schnittstelle kann auch bei der Signal-Rotationsübertragung im aktiven Armmodul 5 auch wiederum eine andere drahtlose Rotations-Schnittstelle für eine Übertragung modulierter elektromagnetischer Wellen über den Spalt verwendet werden. Die erste Schnittstellenseite und die zweiten Schnittstellenseite der Rotations-Schnittstelle bilden dann eine Sender-Empfänger-Anordnung. Sender bzw. Empfänger werden dabei entsprechend dem verwendeten Frequenzbereich ausgewählt. So kann eine Richtfunkübertragung über den Spalt hinweg mit einem Funkchip als Sender auf einer Schnittstellenseite und einer Antenne als Empfänger auf der anderen Schnittstellenseite eingesetzt werden. Alternativ kann auch eine Signalübertragung mit einem Licht- oder Infrarotstrahl erfolgen. Als Sender kann eine Leuchtdiode, eine Laserdiode oder ein Halbleiterlaser verwendet. Die Kollimation kann mit Linsen erfolgen. Als Empfänger dient eine Fotodiode. Die Schnittstellenseite mit dem Sender und die Schnittstellenseite mit dem Empfänger sind gegeneinander rotierbar eingerichtet, um eine Signal-Rotationsübertragung zu ermöglichen. Für eine bidirektionale Signalübertragung weist jede Schnittstellenseite der Rotations-Schnittstelle eine kombinierte Sender-Empfänger-Anordnung auf.

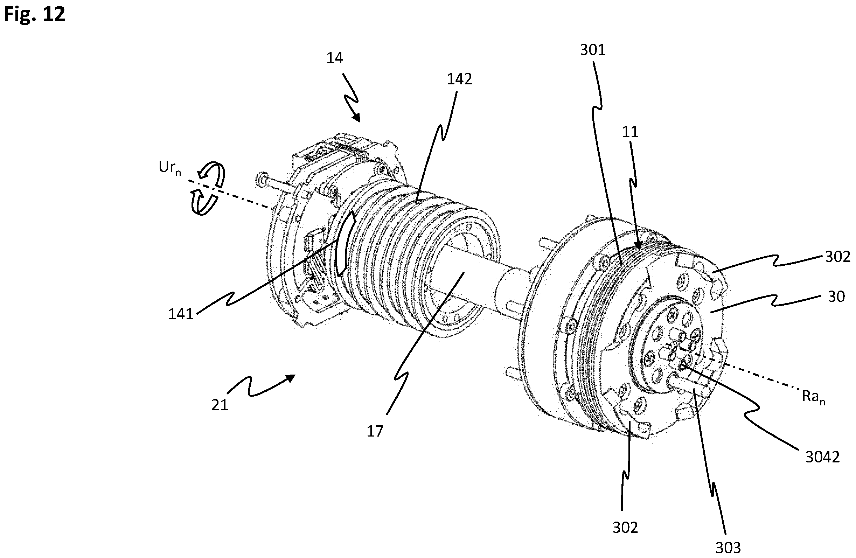

Fig. 12 zeigt in einer Perspektivansicht die wesentlichen Teile der elektrischen Schleifringeinrichtung 14 der elektrischen Rotationsübertragungseinrichtung 21 im multifunktionalen Rotationsübertragungssystem des aktiven Armmoduls 5 aus Fig. 3 und Fig. 4 bzw. Fig. 10.

Die Rotationsübertragbarkeit der Elektrizität erfolgt mittels der elektrischen Schleifringeinrichtung 14 innerhalb des aktiven Armmoduls 5. Die Abtriebswelle 17 fungiert dabei als Abschnitt der elektrischen Rotationsübertragung, auf der die elektrische Gleitkontaktringeinrichtung 142 der Schleifringeinrichtung 14 angeordnet ist. Die Gleitkontaktringeinrichtung 142 der Schleifringeinrichtung 14 ist dabei an einem der rotierbaren ersten Anschlusseinrichtung 30 gegenüberliegenden Längsendabschnitt der Abtriebswelle 17 eingerichtet und weist in der dargestellten Ausführungsform fünf ringförmige Schleifkontakte auf. Jedem der ringförmigen Schleifkontakte der Gleitkontaktringeinrichtung 142 ist eine Anordnung von Bürsten, insbesondere Kohlebürsten der elektrischen Bürsteneinrichtung 141 der Schleifringeinrichtung 14 zugeordnet. Von der mit dem Gehäuse 10 fest verbundenen elektrischen Bürsteneinrichtung 141 der Schleifringeinrichtung 14 ist in Fig. 12 nur ein kleiner Abschnitt gezeigt.

Wie in Fig. 4 und Fig. 10 dargestellt ist, wird im aktiven Armmodul 5 von der gehäusefesten zweiten Anschlusseinrichtung 40 aus die Elektrizität über die elektrischen Leitungen zur Modul-Steuereinheit 18 und von dort weiter zu der elektrischen Bürsteneinrichtung 141 der elektrischen Schleifringeinrichtung 14 zugeführt. Die elektrische Bürsteneinrichtung 141 ist gehäusefest im Armmodul 5 eingerichtet. Die Schleifkontakte der elektrischen Gleitkontaktringeinrichtung 142 drehen sich mit der Abtriebswelle 17 mit und greifen die Elektrizität von den Bürsten der Bürsteneinrichtung 141 ab. Von vier der Schleifkontakte führen vier elektrische Leitungen in der Abtriebswelle 17 zur der rotierbaren ersten Anschlusseinrichtung 30. Die vier elektrischen Leiter in der Abtriebswelle 17 münden in vier elektrische Verbindungseinrichtungen der ersten elektrischen Schnittstelleneinrichtung 3042. Wie zu Fig. 4 weiter oben bereits ausführlich beschrieben, dient der fünfte Schleifkontakt der elektrischen Gleitkontakteinrichtung 142 in Verbindung mit der fünften Bürste der Bürsteneinrichtung 141 zur elektrischen Verbindung zwischen der Zentrieraufnahme 403 der zweiten Anschlusseinrichtung 40 und dem Zentrierstift 303 der ersten Anschlusseinrichtung 30, um einen Potentialausgleich für das aktive Armmodul 5 bereitzustellen.

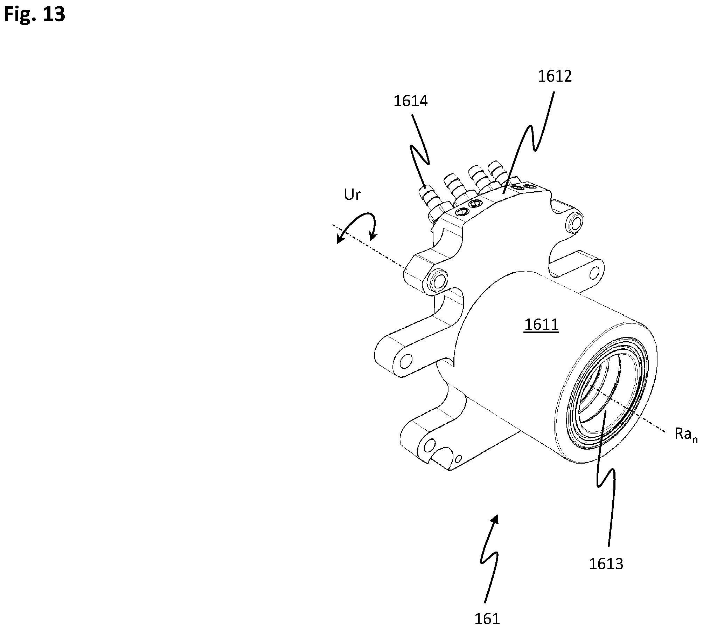

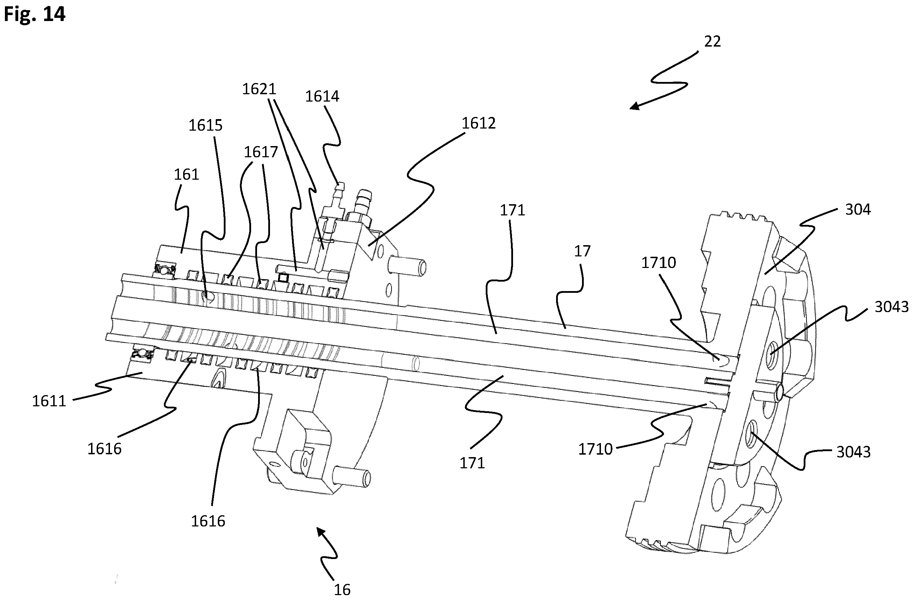

Fig. 13 und Fig. 14 zeigen die wesentlichen Teile der fluidischen Rotationsdurchführung 16 der fluidischen Rotationsübertragungseinrichtung 22 im multifunktionalen Rotationsübertragungssystem des aktiven Armmoduls 5 aus Fig. 3 und Fig. 4 bzw. Fig. 10. Die fluidische Rotationsdurchführung 16 für die Fluidübertragung innerhalb des aktiven Armmoduls 5 weist als Stator die Fluidzuführeinrichtung 161, die mit dem Gehäuse 10 fest verbunden ist, und als Rotor die Abtriebswelle 17 auf, in welcher entsprechende Fluidleitungen 171 ausgebildet sind, wie im Zusammenhang mit Fig. 7 bereits beschrieben. In Fig. 13 ist in einer Perspektivansicht die Fluidzuführeinrichtung 161 und in Fig. 14 in einer in Bezug auf die Rotationsachse Ra leicht nach hinten verschobenen, geschnittenen Perspektivansicht ein Teil der Fluidzuführeinrichtung 161 und der Abtriebswelle 17 der fluidischen Rotationsdurchführung 16 dargestellt, wobei die Abtriebswelle 17 zur besseren Erkennbarkeit der einzelnen Elemente teiltransparent dargestellt ist.

Wie in Fig. 4 und Fig. 10 gezeigt ist, wird Fluid von der gehäusefesten zweiten Anschlusseinrichtung 40 über vier Fluidtransportleitungen zur fluidischen Rotationsdurchführung 16 geführt. Die Rotationsdurchführung 16 überträgt das durch die Fluidtransportleitungen transportierte Fluid dann auf vier in der Abtriebswelle 17 vorgesehene Fluidleitungen 171, die in eine entsprechende Anzahl von Fluidverbindungsleitungen 1710 und dann in eine entsprechende Anzahl von Fluid-Steckverbindungseinrichtungen der ersten fluidischen Schnittstelleneinrichtung 3043 in der rotierbaren ersten Anschlusseinrichtung 30 münden.

Die in Fig. 13 gezeigte Fluidzuführeinrichtung 161 weist ein Ringgehäuse 1611 mit einem Fluidübergabeflansch 1612 und einem sich dran in Axialrichtung anschließenden Fluidübergabeabschnitt 1613 auf. Der Fluidübergabeflansch 1612 besitzt vier äußere Fluidanschlüsse 1614, mittels welchen der Fluidzuführeinrichtung 161 das Fluid von den Fluidtransportleitungen zuführbar ist. Der Fluidübergabeflansch 1612 weist ausgehend von den äußeren Fluidanschlüssen 1614 jeweils einen innenliegenden Verbindungsfluidkanal 1621 (siehe Fig. 14) im Ringgehäuse 1611 auf, der sich in den Fluidübergabeabschnitt 1613 hinein erstreckt.

Im Fluidübergabeabschnitt 1613 enden die innenliegenden vier Verbindungsfluidkanäle 1621 jeweils radial an einem zugeordneten, innen im Fluidübergabeabschnitt 1613 ausgebildeten Umfangsfluidkanal 1616, welcher in einem hohlzylindrischen Abschnitt innerhalb des Fluidübergabeabschnitts 1613 eingerichtet ist. Fig. 14 zeigt einen Ausschnitt des hohlzylindrischen Abschnitts des Fluidübergabeabschnitts 1613 im Querschnitt, wobei die innenliegenden vier Verbindungsfluidkanäle 1621 jeweils eine Bohrung bilden, die in den entsprechenden Umfangsfluidkanälen 1616, die als vollumlaufende innere und innen offene Umfangsnuten ausgebildet sind, enden. Die Umfangsfluidkanäle 1616 sind im hohlzylindrischen Abschnitt des Fluidübergabeabschnitts 1613 bevorzugt gegeneinander mittels Dichtungen 1617 abgedichtet. Alternativ sind die Dichtungen außen an der Abtriebswelle 17, beispielsweise in Außenumfangsnuten einrichtbar.

Die Abtriebswelle 17 weist vier Fluidleitungen 171 (nur zwei gezeigt) auf, die jeweils im Bereich der der jeweiligen Fluidleitung 171 zugeordneten Umfangsfluidkanäle 1616 eine Fluidleitungsdurchgangsbohrung 1615 aufweisen. Somit kann das in einem Umfangsfluidkanal 1616 befindliche Fluid durch die Fluiddurchgangsbohrung 1615 in die jeweilige Fluidleitung 171 der Abtriebswelle 17 übertragen werden. Wie im Zusammenhang mit Fig. 7 bereits beschrieben, münden die vier Fluidleitungen 171 in vier in der ersten Anschlusseinrichtung 30 ausgebildeten Fluidverbindungsleitungen 1710, welche in vier Fluidsteckverbindungseinrichtungen münden, die Teile der ersten fluidischen Schnittstelle 3043 der rotierbaren ersten Anschlusseinrichtung 30 sind.

Es ist natürlich möglich, eine Fluidflussrichtung im aktiven Armmodul 5 auch umgekehrt einzurichten. Weiterhin können die Umfangsfluidkanäle statt in der fluidischen Fluidzuführeinrichtung 161 auch in der Abtriebswelle 17 ausgebildet sein.

### Bezugszeichenliste

- 1: Roboterbasis
- 2: Roboterarm
- 4: Armmodul
- 5: aktives Armmodul
- 5.1: erstes aktives Armmodul
- 5.2: zweites aktives Armmodul
- 5.3: drittes aktives Armmodul
- 5.4: viertes aktives Armmodul
- 5.5: fünftes aktives Armmodul
- 5.6: sechstes aktives Armmodul
- 6: passives Armmodul
- 6.1: erstes passives Armmodul
- 6.2: zweites passives Armmodul
- 7: distales Roboterarm-Ende
- 10: Gehäuse
- 11: erste Anschlussseite
- 12: zweite Anschlussseite
- 13: Antriebseinrichtung
- 14: elektrische Schleifringeinrichtung
- 15: Transceiver
- 16: Rotationsdurchführung
- 17: Abtriebswelle
- 18: Modul-Steuereinheit
- 19: Wellenanordnung
- 20: mechanische Schnittstelle
- 21: elektrische Rotationsübertragungseinrichtung
- 22: fluidische Rotationsübertragungseinrichtung
- 25: optischer Signalpfad
- 26: Elektropfad
- 27: Fluidpfad
- 30: erste Anschlusseinrichtung
- 40: zweite Anschlusseinrichtung
- 55: Rotations-Schnittstelle
- 56: erste Schnittstellenseite
- 57: zweite Schnittstellenseite
- 100: Rotations-Steckeinrichtung
- 110: erste Ferrule
- 119: Lichtwellenleiter
- 110: erste Ferrule
- 131: Elektromotor
- 132: Getriebeeinrichtung
- 133: Hohlwelle
- 141: Bürsteneinrichtung
- 142: Gleitkontaktringeinrichtung
- 161: Fluidzuführeinrichtung
- 171: Abtriebswelle-Fluidleitung
- 210: zweite Ferrule
- 300: Radiallagerhülse
- 301: Außengewinde
- 302: erste Stirnverzahnung
- 303: Zentrierstift
- 304: erste Kontakteinrichtung
- 305: erste mechanische Verbindungselemente
- 401: Befestigungsrings
- 402: zweite Stirnverzahnung
- 403: Zentieraufnahme
- 404: zweite Kontakteinrichtung
- 405: zweite mechanische Verbindungselemente
- 500: optische Rotationsübertragungseinrichtung
- 501: erste optische Rotations-Übertragungseinrichtung
- 502: zweite optische Rotations-Übertragungseinrichtung
- 504: erste Aufnahme (erste optische Rotations-Übertragungseinrichtung)
- 505: erste Aufnahme (zweite optische Rotations-Übertragungseinrichtung)
- 510: zweite Aufnahme (erste optische Rotations-Übertragungseinrichtung)
- 511: zweite Aufnahme (zweite optische Rotations-Übertragungseinrichtung)
- 513: Feder
- 521: Lagerhülse
- 530: erste Linse
- 531: zweite Linse
- 533: erste Linsenaufnahme
- 534: zweite Linsenaufnahme
- 1611: Ringgehäuse
- 1612: Fluidübergabeflansch
- 1613: Fluidübergabeabschnitt
- 1614: Fluidanschluss
- 1615: Fluidleitungsdurchgangsbohrung
- 1616: Umfangsfluidkanal (Fluidzuführeinrichtung)
- 1617: Dichtung
- 1621: Verbindungsfluidkanal
- 1710: Fluidverbindungsleitung
- 3041: erste optische Schnittstelleneinrichtung
- 3042: erste elektrische Schnittstelleneinrichtung
- 3043: erste fluidische Schnittstelleneinrichtung
- 4041: zweite optische Schnittstelleneinrichtung
- 4042: zweite elektrische Schnittstelleneinrichtung
- 4043: zweite fluidische Schnittstelleneinrichtung

## Patentansprüche

1. Armmodul für einen modularen Roboterarm eines Industrieroboters mit einem Gehäuse (10), das eine erste Anschlussseite (11) und eine zweite Anschlussseite (12) aufweist, wobei die erste Anschlussseite (11) relativ gegenüber der zweiten Anschlussseite (12) um eine Rotationsachse steuerbar verdrehbar ausgelegt ist, wobei die erste Anschlussseite (11) eine rotierbare erste Anschlusseinrichtung (30) und die zweite Anschlussseite (12) eine gehäusefeste zweite Anschlusseinrichtung (40) aufweist,
einem multifunktionalen Rotationsübertragungssystem für ein Rotationsübertragung von Datensignalen, von elektrischer Energie und von Fluid, und
einer Antriebseinrichtung (13) mit einer eine Abtriebswelle (17) aufweisenden Wellenanordnung (19), die drehfest mit der rotierbaren ersten Anschlusseinrichtung (30) der ersten Anschlussseite (11) verbunden ist, wobei die Wellenanordnung (19) einen Abschnitt des multifunktionalen Rotationsübertragungssystems bildet;
**dadurch gekennzeichnet, dass**
das multifunktionale Rotationsübertragungssystem eine elektrische Rotationsübertragungseinrichtung (21) und eine fluidische Rotationsübertragungsvorrichtung (22) umfasst, wobei die elektrische Rotationsübertragungseinrichtung (21) eine elektrische Schleifringeinrichtung (14) mit einer Bürsten aufweisenden Bürsteneinrichtung (141) als Stator und einer Schleifkontakte aufweisenden Gleitkontaktringeinrichtung (142) als Rotor aufweist, wobei die Gleitkontaktringeinrichtung (142) auf der Abtriebswelle (17) der Wellenanordnung (19) an einem der rotierbaren ersten Anschlusseinrichtung (30) gegenüberliegenden Längsendabschnitt der Abtriebswelle (17) eingerichtet und so angeordnet ist, dass die Schleifkontakte der elektrischen Gleitkontaktringeinrichtung (142) mit der Abtriebswelle (17) mitdrehen und Elektrizität von den zugeordneten Bürsten der Bürsteneinrichtung (141) abgreifen,
wobei die fluidische Rotationsübertragungsvorrichtung (22) eine fluidische Rotationsdurchführung (16) mit einer Umfangsfluidkanäle (1616) aufweisenden Fluidzuführeinrichtung (161) als Stator und innerhalb der Abtriebswelle (17) angeordnete Fluidleitungen (171) als Rotor umfasst, wobei die Fluidzuführeinrichtung (161) ein Ringgehäuse (1611) mit einem Fluidübergabeflansch (1612) und einem sich dran in Axialrichtung anschließenden Fluidübergabeabschnitt (1613) aufweist und wobei die Fluidleitungen (171) jeweils eine dem jeweiligen Umfangsfluidkanal (1616) zugeordnete Fluidleitungsdurchgangsbohrung (1615) aufweisen und so ein Fluid zwischen einem Umfangsfluidkanal (1616) und einer Fluidleitung (171) übertragbar ist, und
wobei die als Stator dienende Fluidzuführeinrichtung (161) der fluidischen Rotationsdurchführung (16) mit dem Ringgehäuse innerhalb der als Rotor dienenden elektrischen Gleitkontaktringeinrichtung (142) der elektrischen Schleifringeinrichtung (14) angeordnet ist und die fluidischen Rotationsdurchführung (16) die Schleifringeinrichtung (14) rotationslagert bzw. vice versa.

2. Armmodul gemäß Anspruch 1, wobei die Fluidzuführeinrichtung (161) ein Ringgehäuse (1611) mit einem Fluidübergabeflansch (1612) und einem sich dran in Axialrichtung anschließenden Fluidübergabeabschnitt (1613) aufweist, wobei der Fluidübergabeflansch (1612) Fluidanschlüsse (1614) umfasst, mittels welchen der Fluidzuführeinrichtung (161) das Fluid von den Fluidtransportleitungen zuführbar ist, wobei der Fluidübergabeflansch (1612) ausgehend von den äußeren Fluidanschlüssen (1614) jeweils einen innenliegenden Verbindungsfluidkanal (1621) im Ringgehäuse (1611) umfasst, der sich in den Fluidübergabeabschnitt (1613) hinein erstreckt und radial an einem zugeordneten, innen im Fluidübergabeabschnitt (1613) ausgebildeten Umfangsfluidkanal (1616) endet.

3. Armmodul gemäß Anspruch 1 oder 2, wobei die Antriebseinrichtung (13) einen Elektromotor (131) und eine Getriebeeinrichtung (132) aufweist, wobei der Elektromotor (131) ausgelegt ist, mit einer Abtriebsdrehzahl eine Hohlwelle (133) der Wellenanordnung als Eingangswelle der Getriebeeinrichtung (132) anzutreiben, wobei ein Ausgang der Getriebeeinrichtung (132) drehfest mit der Abtriebswelle (17) verbunden ist.

4. Armmodul gemäß Anspruch 3, wobei die Abtriebswelle (17) sich ausgehend von der rotierbaren ersten Anschlusseinrichtung (30) in der Hohlwelle (133) durch die Getriebeeinrichtung (132), den Elektromotor (131), die fluidische Rotationsdurchführung (16) und die elektrische Schleifringeinrichtung (14) hindurch erstreckt, wobei eine erste Lagerung der Abtriebswelle (17) in einem Bereich der rotierbaren ersten Anschlusseinrichtung (30) mittels eines Lagers auf der Hohlwelle (133) und eine zweite Lagerung der Abtriebswelle 17) mittels der Fluidzuführeinrichtung (161) der fluidischen Rotationsdurchführung (16) erfolgt.

5. Armmodul gemäß einem der Ansprüche 1 bis 4, wobei die rotierbare erste Anschlusseinrichtung (30) der ersten Anschlussseite (11) eine erste Kontakteinrichtung (304) mit einer ersten Signal-Schnittstelleneinrichtung (3041), einer ersten elektrischen Schnittstelleneinrichtung (3042) und einer ersten fluidischen Schnittstelleneinrichtung (3043) und die gehäusefeste zweite Anschlusseinrichtung (40) der zweiten Anschlussseite (12) eine zweite Kontakteinrichtung (404) mit einer zweiten Signal-Schnittstelleneinrichtung (4041), einer zweiten elektrischen Schnittstelleneinrichtung (4042) und einer zweiten fluidischen Schnittstelleneinrichtung (4043) umfassen, wobei die erste Signal-Schnittstelleneinrichtung (3041) und die zweite Signal-Schnittstelleneinrichtung (4041), die erste elektrische Schnittstelleneinrichtung (3042) und die zweite elektrische Schnittstelleneinrichtung (4042) sowie die erste fluidische Schnittstelleneinrichtung (3043) und die zweite fluidische Schnittstelleneinrichtung (4043) komplementär zueinander ausgebildet sind.

6. Armmodul (4) gemäß Anspruch 5, wobei die rotierbare erste Anschlusseinrichtung (30) erste mechanische Verbindungselemente (305) und die gehäusefeste zweite Anschlusseinrichtung (40) zweite mechanische Verbindungselemente (405) aufweist, wobei die ersten mechanischen Verbindungselemente (305) und die zweiten mechanischen Verbindungselemente (405) komplementär zueinander ausgebildet sind, und wobei die erste Kontakteinrichtung (304) radial innerhalb der ersten mechanischen Verbindungselemente (305) und die zweite Kontakteinrichtung (404) radial innerhalb der zweiten mechanischen Verbindungselemente (405) angeordnet sind.

7. Armmodul (4) gemäß Anspruch 6, wobei die erste Anschlussseite (11) und die zweite Anschlussseite (12) jeweils eine Rotationsachse aufweisen, wobei die erste Signal-Schnittstelleneinrichtung (3041) auf der Rotationsachse (Ra₁₁) der ersten Anschlussseite (11) und die zweite Signal-Schnittstelleneinrichtung (4041) auf der Rotationsachse (Ra₁₂) der zweiten Anschlussseite (12) angeordnet sind, und wobei die erste elektrische Schnittstelleneinrichtung (3042) und die erste fluidische Schnittstelleneinrichtung (3043) beziehungsweise die zweite elektrische Schnittstelleneinrichtung (4042) und die zweite fluidische Schnittstelleneinrichtung (4043) radial außerhalb der Rotationsachse (Ra₁₁) der ersten Anschlussseite (11) beziehungsweise außerhalb der Rotationsachse (Ra₁₂) der zweiten Anschlussseite (12) angeordnet sind.

8. Industrieroboter (1) mit einem modularen Roboterarm (2), der eine Mehrzahl von Armmodulen (4) gemäß einem der Ansprüche 1 bis 7 aufweist.

## Claims

1. Arm module for a modular robot arm of an industrial robot having
a housing (10) which has a first connection side (11) and a second connection side (12), wherein the first connection side (11) is designed in a controllably rotatable manner about a rotation axis relative to the second connection side (12), wherein the first connection side (11) has a rotatable first connection device (30) and the second connection side (12) has a second connection device (40) fixed to the housing,
a multifunctional rotary transmission system for rotary transmission of data signals, of electrical energy and of fluid, and
a drive device (13) with a shaft arrangement (19) which has an output shaft (17) and is connected in a rotationally fixed manner to the rotatable first connection device (30) of the first connection side (11), wherein the shaft arrangement (19) forms a portion of the multifunctional rotary transmission system; **characterized in that**
the multifunctional rotary transmission system comprises an electrical rotary transmission device (21) and a fluidic rotary transmission apparatus (22),
wherein the electrical rotary transmission device (21) has an electrical slip-ring device (14) with a brush device (141), having brushes, as a stator and a sliding contact ring device (142), having sliding contacts, as a rotor,
wherein the sliding contact ring device (142) is set up on the output shaft (17) of the shaft arrangement (19) on a longitudinal end portion of the output shaft (17) situated opposite the rotatable first connection device (30) and is arranged such that the sliding contacts of the electrical sliding contact ring device (142) rotate together with the output shaft (17) and tap off electricity from the associated brushes of the brush device (141),
wherein the fluidic rotary transmission apparatus (22) comprises a fluidic rotary bushing (16) with a fluid supply device (161), having circumferential fluid ducts (1616), as a stator and fluid lines (171), arranged inside the output shaft (17), as a rotor, wherein the fluid supply device (161) has an annular housing (1611) with a fluid transfer flange (1612) and a fluid transfer portion (1613) adjoining it in the axial direction, and wherein the fluid lines (171) each have a fluid line passage hole (1615) associated with the respective circumferential fluid duct (1616) and therefore a fluid can be transmitted between a circumferential fluid duct (1616) and a fluid line (171), and
wherein the fluid supply device (161), serving as a stator, of the fluidic rotary bushing (16) with the annular housing is arranged inside the electrical sliding contact ring device (142), serving as a rotor, of the electrical slip-ring device (14) and the fluidic rotary bushing (16) rotationally supports the slip-ring device (14), and vice versa.

2. Arm module according to Claim 1, wherein the fluid supply device (161) has an annular housing (1611) with a fluid transfer flange (1612) and a fluid transfer portion (1613) adjoining it in the axial direction, wherein the fluid transfer flange (1612) comprises fluid connections (1614) by means of which the fluid can be supplied from the fluid transport lines to the fluid supply device (161), wherein the fluid transfer flange (1612), starting from the outer fluid connections (1614), respectively comprises an internal connecting fluid duct (1621) in the annular housing (1611), which connecting fluid duct extends into the fluid transfer portion (1613) and ends radially at an associated circumferential fluid duct (1616) formed on the inside of the fluid transfer portion (1613).

3. Arm module according to Claim 1 or 2, wherein the drive device (13) has an electric motor (131) and a gear device (132), wherein the electric motor (131) is designed to drive a hollow shaft (133) of the shaft arrangement as an input shaft of the gear device (132) at an output rotation speed, wherein an output of the gear device (132) is connected in a rotationally fixed manner to the output shaft (17).

4. Arm module according to Claim 3, wherein the output shaft (17) extends, starting from the rotatable first connection device (30) in the hollow shaft (133), through the gear device (132), the electric motor (131), the fluidic rotary bushing (16) and the electrical slip-ring device (14), wherein the output shaft (17) is firstly supported in a region of the rotatable first connection device (30) by means of a bearing on the hollow shaft (133) and the output shaft (17) is secondly supported by means of the fluid supply device (161) of the fluidic rotary bushing (16).

5. Arm module according to one of Claims 1 to 4, wherein the rotatable first connection device (30) of the first connection side (11) comprises a first contact device (304) with a first signal interface device (3041), a first electrical interface device (3042) and a first fluidic interface device (3043), and the second connection device (40), fixed to the housing, of the second connection side (12) comprises a second contact device (404) with a second signal interface device (4041), a second electrical interface device (4042) and a second fluidic interface device (4043), wherein the first signal interface device (3041) and the second signal interface device (4041), the first electrical interface device (3042) and the second electrical interface device (4042), and also the first fluidic interface device (3043) and the second fluidic interface device (4043) are designed in a complementary manner in relation to one another.

6. Arm module (4) according to Claim 5, wherein the rotatable first connection device (30) has first mechanical connecting elements (305) and the second connection device (40), fixed to the housing, has second mechanical connecting elements (405), wherein the first mechanical connecting elements (305) and the second mechanical connecting elements (405) are designed in a complementary manner in relation to one another, and wherein the first contact device (304) is arranged radially inside the first mechanical connecting elements (305) and the second contact device (404) is arranged radially inside the second mechanical connecting elements (405) .

7. Arm module (4) according to Claim 6, wherein the first connection side (11) and the second connection side (12) each have a rotation axis, wherein the first signal interface device (3041) is arranged on the rotation axis (Ran) of the first connection side (11) and the second signal interface device (4041) is arranged on the rotation axis (Ra₁₂) of the second connection side (12), and wherein the first electrical interface device (3042) and the first fluidic interface device (3043) or the second electrical interface device (4042) and the second fluidic interface device (4043) are respectively arranged radially outside the rotation axis (Ran) of the first connection side (11) or outside the rotation axis (Ra₁₂) of the second connection side (12).

8. Industrial robot (1) having a modular robot arm (2) which has a plurality of arm modules (4) according to one of Claims 1 to 7.

## Revendications

1. Module de bras pour un bras robotisé modulaire d'un robot industriel, comprenant
un boîtier (10) qui présente une première face de raccordement (11) et une deuxième face de raccordement (12), la première face de raccordement (11) étant conçue pour pouvoir tourner de manière commandée autour d'un axe de rotation par rapport à la deuxième face de raccordement (12), la première face de raccordement (11) présentant un premier dispositif de raccordement rotatif (30) et la deuxième face de raccordement (12) présentant un deuxième dispositif de raccordement fixé au boîtier (40),
un système de transmission en rotation multifonctionnel pour une transmission en rotation de signaux de données, d'énergie électrique et de fluide, et
un dispositif d'entraînement (13) pourvu d'un agencement d'arbre (19) présentant un arbre de sortie (17) et qui est relié de manière solidaire en rotation au premier dispositif de raccordement rotatif (30) de la première face de raccordement (11), l'agencement d'arbre (19) formant une partie du système de transmission en rotation multifonctionnel ;
**caractérisé en ce que** le système de transmission en rotation multifonctionnel comprend un dispositif de transmission en rotation électrique (21) et un dispositif de transmission en rotation fluidique (22), le dispositif de transmission en rotation électrique (21) présentant comme stator un dispositif à bague collectrice électrique (14) pourvu d'un dispositif à brosses (141) présentant des brosses et comme rotor un dispositif de bague de contact glissant (142) présentant des contacts à frottement, le dispositif de bague de contact glissant (142) sur l'arbre de sortie (17) de l'agencement d'arbre (19) étant aménagé sur une partie d'extrémité longitudinale de l'arbre de sortie (17), opposée au premier dispositif de raccordement rotatif (30), et étant disposé de telle sorte que les contacts à frottement du dispositif de bague de contact glissant (142) tournent avec l'arbre de sortie (17) et prélèvent de l'électricité des brosses associées du dispositif à brosses (141),
le dispositif de transmission en rotation fluidique (22) comprenant un passage en rotation fluidique (16) avec comme stator un dispositif d'alimentation en fluide (161) présentant des canaux de fluide circonférentiels (1616) et comme rotor des conduites de fluide (171) disposées à l'intérieur de l'arbre de sortie (17), le dispositif d'alimentation en fluide (161) présentant un boîtier annulaire (1611) pourvu d'une bride de transfert de fluide (1612) et d'une partie de transfert de fluide (1613) se raccordant à celle-ci dans la direction axiale, et les conduites de fluide (171) présentant respectivement un alésage traversant de conduite de fluide (1615) associé au canal de fluide circonférentiel (1616) respectif et permettant ainsi le transfert d'un fluide entre un canal de fluide circonférentiel (1616) et une conduite de fluide (171), et
le dispositif d'alimentation en fluide (161) servant de stator du passage en rotation fluidique (16) étant disposé avec le boîtier annulaire à l'intérieur du dispositif de bague de contact glissant (142) servant de rotor du dispositif à bague de contact glissant électrique (14), et le passage en rotation fluidique (16) assurant le montage en rotation du dispositif de bague de contact glissant (14) ou vice versa.

2. Module de bras selon la revendication 1, dans lequel le dispositif d'alimentation en fluide (161) présente un boîtier annulaire (1611) pourvu d'une bride de transfert de fluide (1612) et d'une partie de transfert de fluide (1613) se raccordant à celle-ci dans la direction axiale, la bride de transfert de fluide (1612) comprenant des raccords de fluide (1614) au moyen desquels le fluide peut être alimenté au dispositif d'alimentation en fluide (161) en provenance des conduites de transport de fluide, la bride de transfert de fluide (1612) comprenant en partant des raccords de fluide extérieurs (1614) respectivement un canal de fluide de liaison interne (1621) dans le boîtier annulaire (1611) qui s'étend dans la partie de transfert de fluide (1613) et se termine radialement au niveau d'un canal de fluide circonférentiel (1616) associé, réalisé à l'intérieur de la partie de transfert de fluide (1613).

3. Module de bras selon la revendication 1 ou 2, dans lequel le dispositif d'entraînement (13) présente un moteur électrique (131) et un dispositif de transmission (132), le moteur électrique (131) étant conçu pour entraîner à une vitesse de rotation de sortie un arbre creux (133) de l'agencement d'arbre comme arbre d'entrée du dispositif de transmission (132), une sortie du dispositif de transmission (132) étant reliée de manière solidaire en rotation à l'arbre de sortie (17).

4. Module de bras selon la revendication 3, dans lequel l'arbre de sortie (17) s'étend en partant du premier dispositif de raccordement rotatif (30) dans l'arbre creux (133) à travers le dispositif de transmission (132), le moteur électrique (131), le passage en rotation fluidique (16) et le dispositif de bague de contact glissant électrique (14), un premier logement de l'arbre de sortie (17) étant effectué dans une zone du premier dispositif de raccordement rotatif (30) au moyen d'un palier sur l'arbre creux (133) et un deuxième logement de l'arbre de sortie (17) étant effectué au moyen du dispositif d'alimentation en fluide (161) du passage en rotation fluidique (16).

5. Module de bras selon l'une quelconque des revendications 1 à 4, dans lequel le premier dispositif de raccordement rotatif (30) de la première face de raccordement (11) présente un premier dispositif de contact (304) pourvu d'un premier dispositif d'interface de signal (3041), d'un premier dispositif d'interface électrique (3042) et d'un premier dispositif d'interface fluidique (3043), et le deuxième dispositif de raccordement (40) fixé au boîtier de la deuxième face de raccordement (12) présente un deuxième dispositif de contact (404) pourvu d'un deuxième dispositif d'interface de signal (4041), d'un deuxième dispositif d'interface électrique (4042) et un deuxième dispositif d'interface fluidique (4043), le premier dispositif d'interface de signal (3041) et le deuxième dispositif d'interface de signal (4041), le premier dispositif d'interface électrique (3042) et le deuxième dispositif d'interface électrique (4042) ainsi que le premier dispositif d'interface fluidique (3043) et le deuxième dispositif d'interface fluidique (4043) étant réalisés de manière complémentaires les uns aux autres.

6. Module de bras (4) selon la revendication 5, dans lequel le premier dispositif de raccordement rotatif (30) présente des premiers éléments de liaison mécaniques (305), et le deuxième dispositif de raccordement fixé au boîtier (40) présente des deuxièmes éléments de liaison mécaniques (405), les premiers éléments de liaison mécaniques (305) et les deuxièmes éléments de liaison mécaniques (405) étant réalisés de manière complémentaire les uns aux autres, et le premier dispositif de contact (304) étant disposé radialement à l'intérieur des premiers éléments de liaison mécaniques (305) et le deuxième dispositif de contact (404) étant disposé radialement à l'intérieur des deuxièmes éléments de liaison mécaniques (405).

7. Module de bras (4) selon la revendication 6, dans lequel la première face de raccordement (11) et la deuxième face de raccordement (12) présentent respectivement un axe de rotation, le premier dispositif d'interface de signal (3041) étant disposé sur l'axe de rotation (Ra₁₁) de la première face de raccordement (11) et le deuxième dispositif d'interface de signal (4041) étant disposé sur l'axe de rotation (Ra₁₂) de la deuxième face de raccordement (12), et le premier dispositif d'interface électrique (3042) et le premier dispositif d'interface fluidique (3043) ou respectivement le deuxième dispositif d'interface électrique (4042) et le deuxième dispositif d'interface fluidique (4043) étant disposés radialement à l'extérieur de l'axe de rotation (Ra₁₁) de la première face de raccordement (11) ou respectivement à l'extérieur de l'axe de rotation (Ra₁₂) de la deuxième face de raccordement (12).

8. Robot industriel (1) pourvu d'un bras robotisé modulaire (2) qui présente une pluralité de modules de bras (4) selon l'une quelconque des revendications 1 à 7.
